# FASCICULE DE BREVET EUROPEEN

(11) **EP 3 715 786 B1**
(45) Date de publication et mention de la délivrance du brevet: **16.04.2025**
(21) Numéro de dépôt: 20163488.8
(22) Date de dépôt: 17.03.2020
(51) Int. Cl.: G01C 21/20, G08G 5/00, G06Q 10/04, G06Q 10/047

(54) **SYSTÈME DE CALCUL DE MISSION D'UN AÉRONEF UTILISANT AU MOINS UNE COURBE D'ISO-DÉPLACEMENT ÉTENDUE ET PROCÉDÉ ASSOCIÉ**
BERECHNUNGSSYSTEM DER MISSION EINES LUFTFAHRZEUGS, DAS MINDESTENS EINE ERWEITERTE ISO-VERSCHIEBUNGSKURVE VERWENDET, UND ENTSPRECHENDES VERFAHREN
MISSION CALCULATION SYSTEM FOR AN AIRCRAFT USING AT LEAST ONE EXTENDED ISO-DISPLACEMENT CURVE AND ASSOCIATED METHOD

(30) Priorité: 18.03.2019 FR 1902747
(43) Date de publication de la demande: 30.09.2020
(73) Titulaire: Dassault Aviation, 75008 Paris (FR)
(72) Inventeur: GRIMALD, Cyrille, 92214 SAINT CLOUD (FR); URIEN, Benoit, 92214 SAINT CLOUD (FR)
(74) Mandataire: Lavoix

(56) Documents cités:
- EP-A1- 3 594 870
- FR-A1- 3 032 271
- US-B1- 6 266 610

## Description

La présente invention concerne un système de calcul de mission d'un aéronef selon le préambule de la revendication 1.

L'invention s'applique aux aéronefs utilisés dans l'aviation civile, en particulier dans l'aviation d'affaires.

Un tel système de calcul est notamment destiné à être intégré dans un cockpit, en parallèle d'un système de conduite de vol (« Flight Management System » ou « FMS » en anglais), pour permettre à l'équipage de déterminer des trajectoires de mission.

En variante, le système de calcul est propre à être intégré dans un système de planification de mission non embarqué, par exemple dans une infrastructure aéroportuaire d'établissement de trajectoire d'aéronef, dans un bagage de vol électronique (« Electronic Flight Bag » ou « EFB »), et/ou dans un dispositif électronique portable (par exemple une tablette), ou dans un ordinateur de type PC.

Le système de calcul est adapté pour déterminer une trajectoire complète de l'aéronef dans le plan horizontal et dans le plan vertical sur plusieurs niveaux de vol entre un premier point géographique d'origine et un deuxième point géographique de destination. La mission comprend une ou plusieurs étapes.

La préparation et la définition d'une mission d'aéronef entre un premier point géographique et un deuxième point géographique est une tâche consommatrice en temps. Elle nécessite notamment de déterminer la route que va suivre l'aéronef, le profil de vol associé, le chargement en passagers, en fret et en carburant et le calcul de performances basses vitesses, ainsi que la vérification du domaine de vol de l'aéronef.

Cette définition est effectuée en fonction d'un contexte de mission incluant la météorologie, les routes aériennes à emprunter, la connectivité avec des systèmes de communication par satellite et d'un contexte avion qui inclut la configuration et le type d'aéronef utilisé, ainsi que son état de fonctionnement.

Généralement, dans l'aviation civile, les compagnies aériennes et/ou des fournisseurs externes disposent de systèmes de calcul permettant de fournir un plan de vol et des performances aéronef attendues, par exemple une quantité de carburant requise.

Dans l'aviation d'affaires, les contraintes pesant sur l'équipage sont importantes et spécifiques. Les clients demandent parfois à l'équipage de respecter des critères de mission plus stricts, par exemple en matière de confort du passager pendant le vol, de possibilité de se connecter à des systèmes de transmission par satellite, de masse offerte par l'avion etc.

De plus, les conditions de mission, notamment les horaires de décollage, sont sujets à changement et la destination peut changer rapidement en fonction des besoins propres des passagers.

Dans ce cadre, les systèmes de fournitures de plans de vol existants ne donnent pas entière satisfaction.

En particulier, ces systèmes sont conçus pour fonctionner sur une somme de critères d'entrée (vitesse, niveau de vol, nombre de passagers...) auquel correspondra une seule solution de navigation. Il est donc fréquemment nécessaire d'effectuer plusieurs itérations pour ajuster les hypothèses de mission.

Les résultats obtenus par les systèmes de fournisseurs de plan de vol sont en outre généralement incomplets en ce qui concerne les critères requis pour effectuer la mission, notamment dans la gestion des critères clients, du contexte avion et des performances.

Par conséquent, les solutions de trajectoires proposées par le fournisseur ne sont pas satisfaisantes pour le client et/ou résultent en un temps de vol non optimal et/ou en une consommation en carburant augmentée.

FR 3 032 271 décrit un système de calcul de mission qui établit dans un plan horizontal des courbes d'iso coût de déplacement de l'aéronef. Ce système ne traite pas de l'optimisation verticale.

Un but de l'invention est donc de fournir un système de calcul de mission d'aéronef qui permette à l'équipage de trouver facilement une trajectoire optimisée à la fois horizontalement et verticalement, en tenant compte de l'état courant de l'aéronef, des critères imposés par le client, et des contraintes du volume de mission, en particulier dans le plan vertical

À cet effet, l'invention a pour objet un système selon la revendication 1.

Le système selon l'invention peut comprendre l'une ou plusieurs des caractéristiques des revendications 2 à 10, prise(s) isolément ou suivant toute combinaison techniquement possible.

L'invention a également pour objet un procédé de calcul de mission d'un aéronef, selon la revendication 11.

L'invention sera mieux comprise à la lecture de la description qui va suivre, donnée uniquement à titre d'exemple, et faite en se référant aux dessins annexés, sur lesquels :
[Fig 1] la figure 1 est un schéma synoptique illustrant un premier système de calcul de mission selon l'invention
[Fig 2] la figure 2 est une vue schématique de dessus illustrant, à plusieurs niveaux de vol, la détermination d'une pluralité de courbes isochrones après plusieurs incréments de déplacement
[Fig 3] la figure 3 est une vue du profil vertical des déplacements de l'aéronef à des paliers distincts, pour déterminer des courbes isochrones en vue d'établir un point d'une courbe d'isochrone étendue à un niveau de vol donné ;
[Fig 4] la figure 4 est une vue analogue à la figure 3, illustrant la section dans un plan vertical d'une zone d'évitement ;
[Fig 5] la figure 5 est une vue analogue à la figure 2, pour un niveau de vol donné, illustrant l'obtention d'une courbe isochrone étendue ;
[Fig 6] la figure 6 est une vue analogue à la figure 2, illustrant plusieurs courbes isochrones étendues obtenues à plusieurs niveaux de vol, pour le même intervalle de déplacement ;
[Fig 7] la figure 7 est une vue analogue à la figure 6, illustrant à plusieurs niveaux de vol, la détermination d'une pluralité de courbes isochrones à partir des isochrones étendues ;

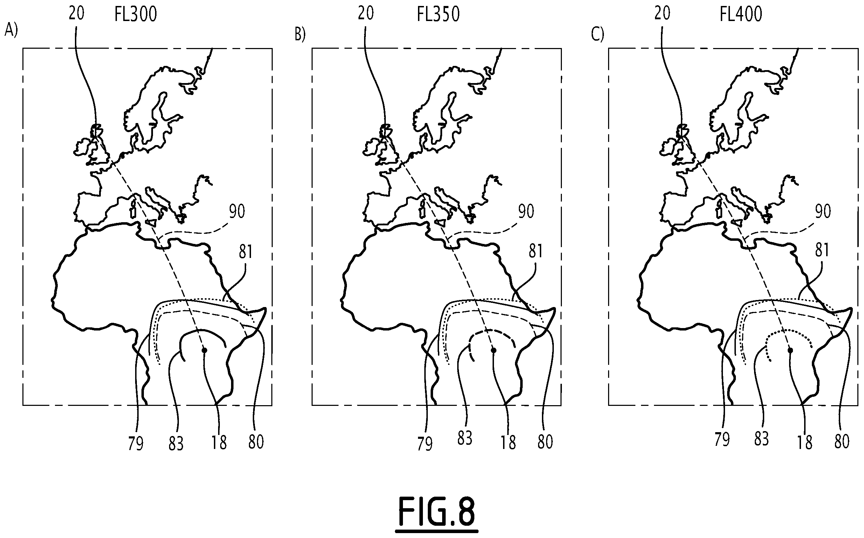

[Fig 8] la figure 8 est une vue analogue à la figure 7, illustrant la détermination des courbes isochrones étendues à chacun des niveaux de vols à un deuxième intervalle de déplacement ;

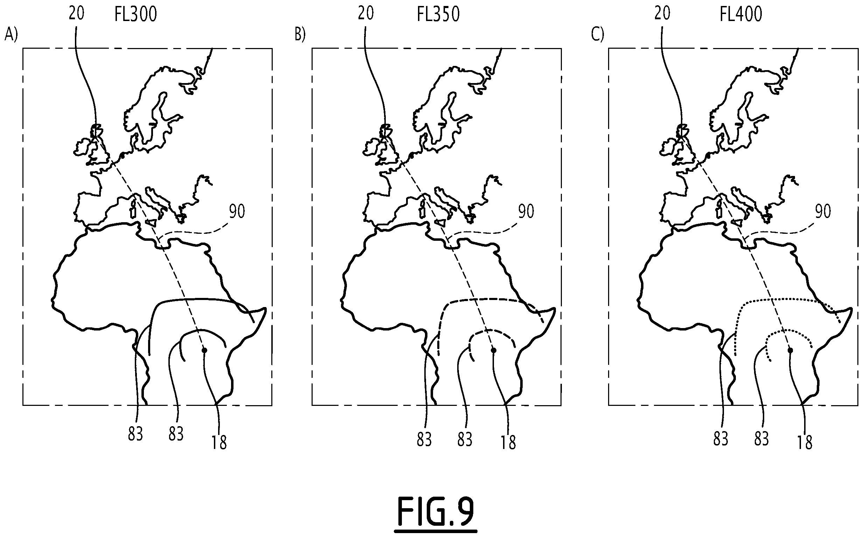

[Fig 9] la figure 9 est une vue analogue à la figure 8, les courbes isochrones étendues ayant été déterminées ;
[Fig 10] la figure 10 est une vue analogue à la figure 2, illustrant l'obtention d'une trajectoire entre un point géographique de départ et un point géographique de destination;
[Fig 11] la figure 11 illustre un profil vertical de la trajectoire ;
[Fig 12] la figure 12 illustre les trajectoires obtenues à l'aide de courbes isochrones étendues, ou à l'aide de courbes d'iso-consommation de carburant étendues ;
[Fig 13] la figure 13 illustre une variante de l'invention illustrant le principe de passage d'une trajectoire libre à une trajectoire contrainte par des routes aériennes ;
[Fig 14] la figure 14 est une vue schématique d'un deuxième système de calcul de mission selon l'invention.

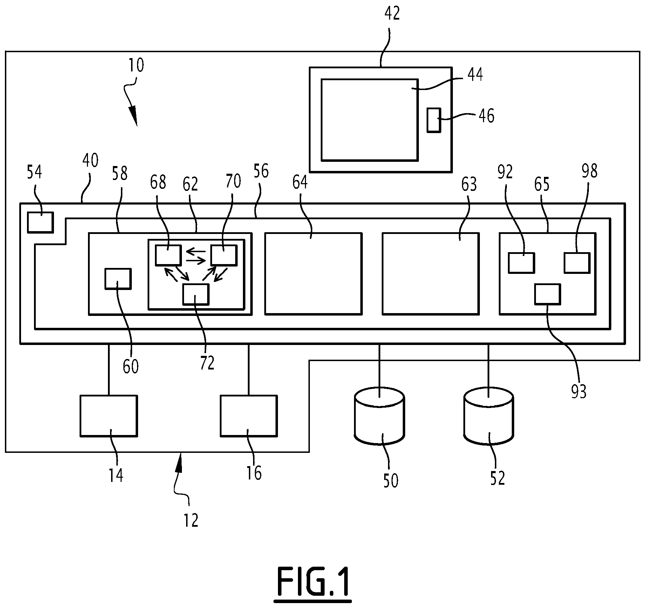

Un premier système 10 de calcul de mission selon l'invention, qui, dans cet exemple, est présent dans le cockpit 12 d'un aéronef, est illustré par la figure 1.

L'aéronef est de préférence un aéronef civil, notamment un avion d'affaires.

D'une manière connue, le cockpit 12 de l'aéronef est destiné à commander l'ensemble des systèmes de l'aéronef lors de son utilisation.

Le cockpit 12 comporte notamment, outre le système 10 de calcul de mission, un système 14 de conduite de vol du cockpit de l'aéronef (« Flight Management System » en anglais ou « FMS »), et un système 16 de gestion et de suivi des différents systèmes avion.

Le système de conduite de vol 14 est destiné à assister le pilote de l'aéronef pour mener la navigation de l'aéronef lors d'une mission. Il est propre à fournir des informations notamment sur la route suivie par l'aéronef, et sur des paramètres d'évolution de l'aéronef tels que la consommation en carburant.

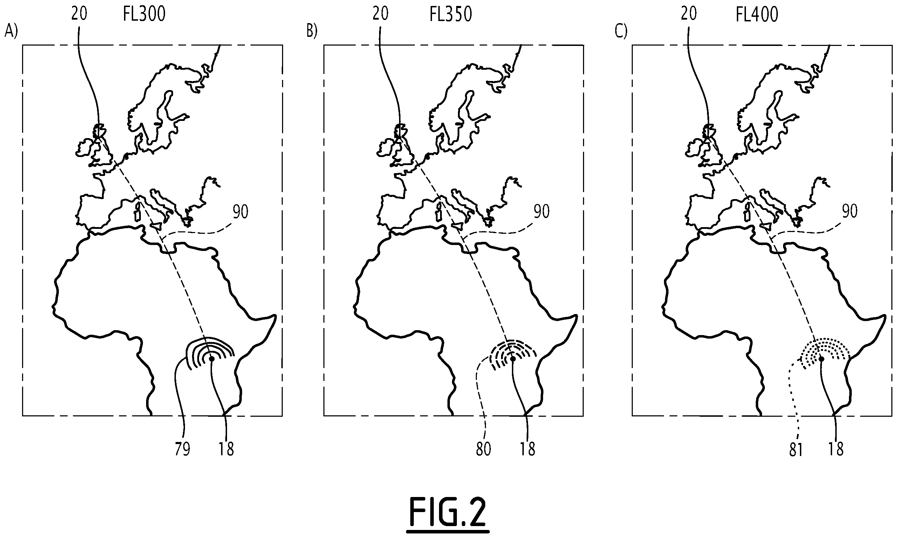

Il est également propre à guider l'aéronef pour lui faire suivre une trajectoire prédéterminée entre un premier point géographique 18 d'origine et un deuxième point géographique 20 de destination (représentés schématiquement sur la figure 2).

Le système 16 de gestion et de suivi des différents systèmes avion est notamment destiné à permettre à l'équipage de suivre et éventuellement de piloter l'ensemble des systèmes aéronef. Il est propre en particulier à déterminer un état de fonctionnement de l'aéronef, notamment la présence de défauts et de pannes présents sur l'aéronef au sol et/ou en vol. Comme on le verra plus bas, le système de calcul de mission 10 selon l'invention est raccordé au système de gestion 16 pour prendre en compte l'état de l'avion dans les calculs de mission.

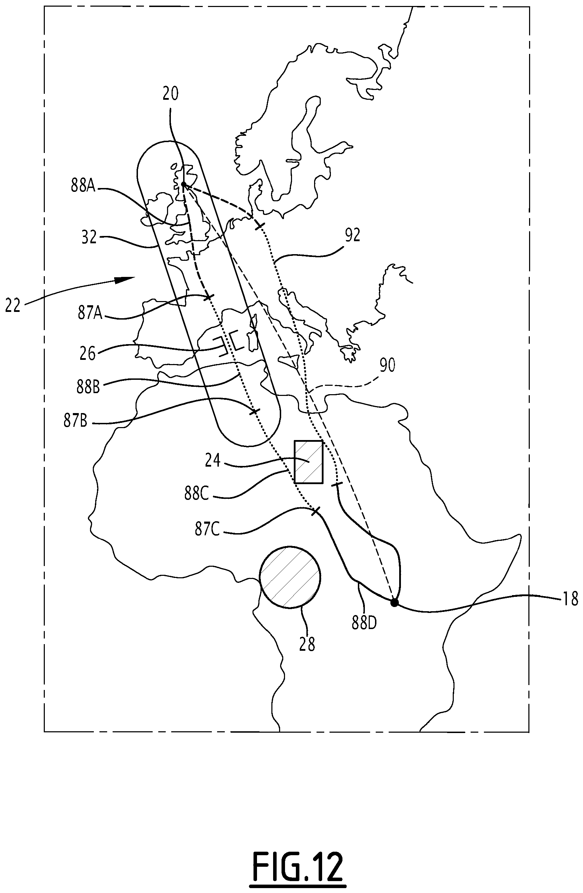

La mission effectuée par l'aéronef comporte au moins une étape 22 (ou « leg »), représentée schématiquement sur la figure 12, entre un premier point géographique 18 d'origine et un deuxième point géographique 20 de destination. Dans certains cas (non représentés), la mission effectuée par l'aéronef comporte une pluralité d'étapes 22 successives, le deuxième point géographique 20 de destination d'une première étape constituant le premier point géographique 18 d'origine d'une deuxième étape.

La mission est effectuée en suivant des spécifications opérationnelles qui comprennent notamment un contexte de mission et un contexte avion.

Le contexte de mission comporte par exemple au moins une contrainte d'opération, notamment un nombre de passagers à transporter, un poids maximum au décollage lié notamment à une longueur de piste disponible, une charge en carburant de navigation, une charge en carburant de réserve, un horaire de départ et/ou un horaire d'arrivée imposés, une distance maximale à parcourir, et/ou une distance à un terrain alternatif en route.

En référence à la figure 12, le contexte de mission comprend avantageusement des contraintes de navigation, comme par exemple des zones 24 ou des niveaux de vol interdits, des routes 26 aériennes ou des niveaux de vol imposés, ou plus globalement des zones de vol libre et/ou des zones de vol imposé par les voies aériennes.

Le contexte de mission comprend avantageusement des contraintes météorologiques telles que des zones 28 de phénomènes météorologiques dangereux notamment de formation de gel ou de cumulonimbus.

Le contexte de mission comprend éventuellement aussi des contraintes de confort passager, notamment des zones 30 de turbulences à éviter, en particulier en fonction d'un niveau de turbulences souhaité, choisi par exemple parmi un niveau faible, un niveau moyen, et un niveau fort de turbulences, ou des zones 32 de couverture de télécommunication par satellite pour permettre une télécommunication entre l'aéronef et le monde extérieur notamment au sol, en particulier choisi parmi un niveau faible, un niveau moyen et un bon niveau de possibilité de communication.

Dans cet exemple, les différentes zones 24, 28, 30, 32 sont définies de préférence par des coordonnées horizontales (par exemple latitude et longitude) et par des coordonnées verticales en altitude. La position de ces zones évolue avantageusement au cours du temps. Dans ce cas, les coordonnées précitées évoluent temporellement, définissant une zone quadridimensionnelle (ou 4D) d'évitement ou au contraire une zone quadridimensionnelle de passage souhaité ou contraint.

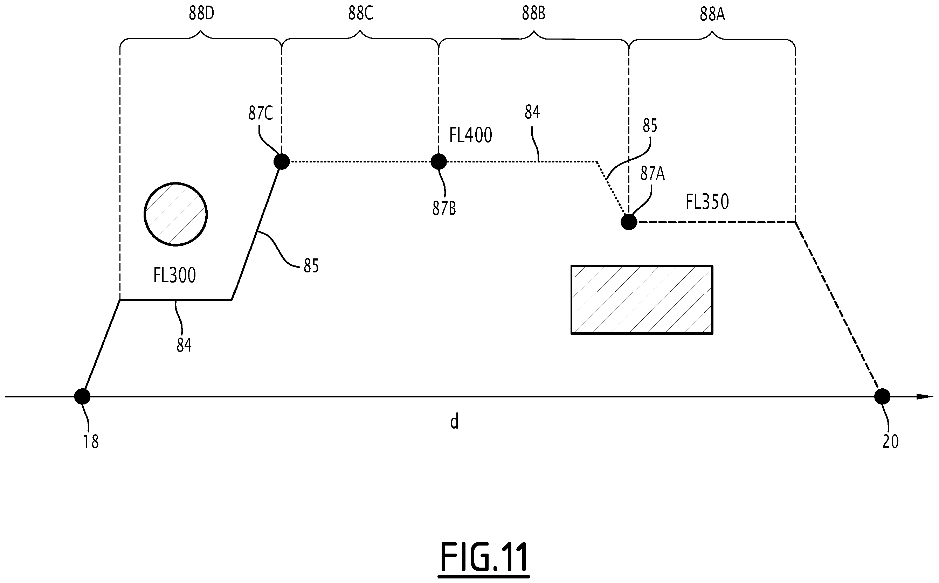

Les zones 24, 28, 30, 32 définissent donc, dans le plan horizontal illustré sur la figure 12, des sections horizontales d'évitement ou au contraire, des sections horizontales de passage souhaité ou contraint. Elles définissent par ailleurs, dans le plan vertical illustré sur la figure 11, des sections verticales d'évitement ou au contraire, des sections verticales de passage souhaité ou contraint. La position des zones 24, 28, 30, 32 évolue avantageusement dans le temps.

Le contexte avion peut comprendre des contraintes d'utilisation liées à des autorisations à partir (ou « dispatch ») et/ou des contraintes liées à un état particulier de l'aéronef en termes de défauts et/ou de pannes sur un ou plusieurs équipements de l'aéronef.

Par exemple, une autorisation à partir liée à certains défauts de l'aéronef peut imposer un niveau de vol maximal et/ou une vitesse maximale. Un défaut de rentrée du train d'atterrissage ou d'un volet peut également imposer une contrainte de consommation en carburant augmentée.

Le système de calcul de mission 10 est destiné à établir une trajectoire de l'aéronef pour effectuer l'étape 22 entre au moins un premier point géographique 18 d'origine et au moins un deuxième point géographique 20 de destination, en tenant compte des spécifications opérationnelles, et notamment du contexte de mission et du contexte avion, tout en suivant les routes aériennes existantes.

La trajectoire obtenue par l'intermédiaire du système de calcul de mission 10 inclut la route de l'aéronef en latitude et en longitude, avec un profil vertical de vol, défini par une ou plusieurs altitudes et des temps de passage. La route est donc déterminée en quatre dimensions.

Avantageusement, le système de calcul de mission 10 est en outre propre à établir des paramètres de plan de vol, notamment le poids et l'équilibre de l'aéronef, le carton de décollage et d'atterrissage (c'est-à-dire les données de vol pour le pilote relatives au guidage telles que les vitesses V1, V2, VR sur la piste, l'accélération au lâcher des freins, le régime moteur au décollage, et/ou l'assiette au décollage), le calcul des masses limites au décollage et à l'atterrissage, la météorologie à basse vitesse (c'est-à-dire en surface) et à grande vitesse (c'est-à-dire en route), les informations de contrôle aérien (service de diffusion ATIS pour « Automated Terminal Information Service », e-NOTAM pour « Notice to airmen » , fréquence de télécommunications, FIRS pour « Flight Information RegionS », centre de contrôle aérien), et/ou les terrains alternatifs disponibles à destination, et en cours de route.

En référence à la figure 1, le système de calcul de mission 10 comporte un moteur de calcul 40 et avantageusement, une interface utilisateur 42 de paramétrage et de restitution formant une platine de mission.

L'interface utilisateur 42 comporte par exemple au moins un écran 44, et au moins un organe 46 de sélection et de saisie d'information par l'utilisateur, qui peut être un clavier réel ou virtuel, une souris et/ou un système tactile.

L'interface utilisateur 42 est propre à autoriser l'utilisateur à saisir au moins une partie des spécifications opérationnelles, notamment les points géographiques 18, 20 d'origine et de destination, des points de passage, des horaires souhaités, des charges souhaitées, un vent maximum sur la trajectoire, etc.

Elle est propre avantageusement à permettre à l'utilisateur de définir au moins une partie du contexte de mission, en particulier les contraintes de navigation et de confort passager, et/ou de définir au moins une partie du contexte avion.

Un exemple d'interface 42 est décrit dans la demande de brevet français intitulée « Système de calcul de mission d'un aéronef, comportant une platine de mission et procédé associé » déposée sous le numéro 17 01234 par la Demanderesse.

Le moteur de calcul 40 est connecté à l'interface 42. Il est avantageusement raccordé également au système de conduite de vol 14, au système de gestion et de suivi 16.

Il est propre à interroger une base de données 50 météorologique et/ou une base de données 52 d'information de navigation, par exemple par l'intermédiaire d'un réseau de données, notamment un réseau de données sans fil.

La base de données météorologique 50 contient des données météorologiques actuelles et prédictives dans la zone de navigation de l'aéronef dans un volume de mission s'étendant entre le point d'origine 18 et le point de destination 20. Le volume de mission présente de préférence une largeur significative, par exemple au moins 700 miles nautiques, de part et d'autre de la trajectoire orthodromique 90 entre le point d'origine 18 et le point de destination 20.

Ces données météorologiques sont fournies à plusieurs niveaux de vol, par exemple tous les 304 m (1000 pieds), à une altitude comprise par exemple entre 0 m et 15545 m (51000 pieds).

Les données météorologiques sont fournies en altitude mais aussi en fournissant un composant météorologique évolutif dans le temps. Ce composant évolutif est obtenu à l'aide de données de prévision météorologiques, pouvant inclure une pluralité de cartes météorologiques à des instants successifs dans le temps (par exemple toutes les heures).

Ces données météorologiques incluent notamment la vitesse et la direction du vent, la température, la pression, les précipitations, les phénomènes dangereux (gel, orages / cumulonimbus), la turbulence, le niveau de la tropopause, les nuages de cendre volcanique, les nuages de poussière / sable, la visibilité, ainsi que les observations aéronautiques sur zone ou en route (METAR, PIREPS) et les prévisions sur zone (TAF)... Elles comportent éventuellement la définition et l'évolution dans le temps et dans l'espace des coordonnées géographiques de zones 28 de phénomènes météorologiques dangereux et/ou de zones de turbulences 30.

Ces données météorologiques définissent un contexte météorologique, de préférence évolutif, dans le volume de mission s'étendant entre le point géographique d'origine 18 et le point géographique de destination 20.

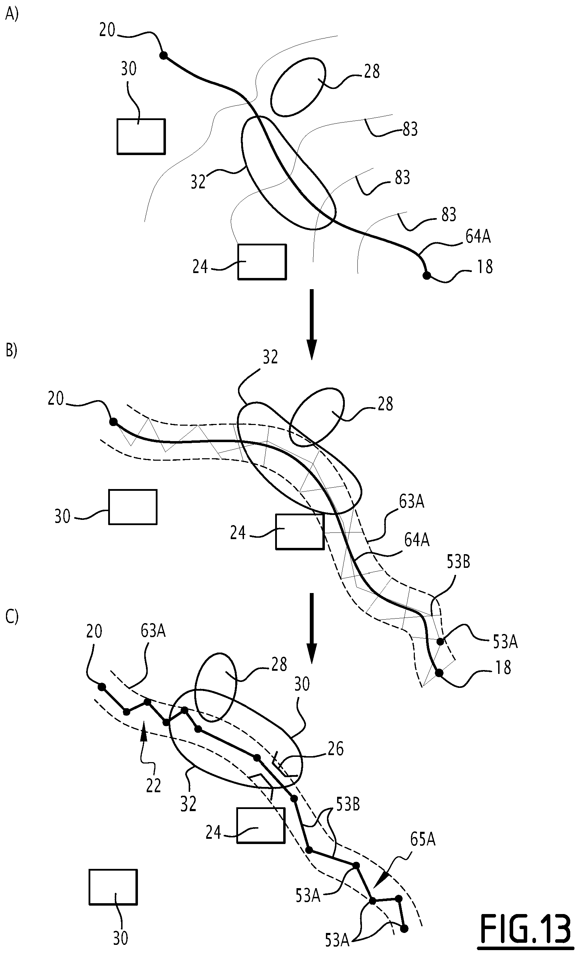

La base de données d'information de navigation 52 contient des données d'information sur les terrains au point d'origine 18 et au point de destination 20, et entre ces points 18, 20. La base de données d'information de navigation 52 comporte avantageusement une sous-base de données aéroports (longueurs de piste, orientation des pistes, pentes, etc.) et une sous-base de données de navigation. Les données de navigation incluent notamment un réseau de points de passage 53A (ou « waypoints ») et les trajectoires 53B imposées entre les points de passage, tel que définies par les autorités aériennes dans chaque pays (voir figure 13).

Elle contient avantageusement la définition des coordonnées géographiques de zones et/ou de niveaux de vol interdits 24, notamment en raison de données géopolitiques, et/ou de routes 26 aériennes imposées.

Elle comporte éventuellement la définition de zones 32 de couverture de télécommunications par satellite (SATCOM).

Le moteur de calcul 40 comporte au moins un calculateur comprenant au moins un processeur 54 et une mémoire 56. La mémoire 56 contient des modules logiciels propres à être exécutés par le processeur 54. En variante, les modules sont réalisés au moins partiellement sous forme de composants logiques programmables, ou encore sous forme de circuits intégrés dédiés.

Dans cet exemple, la mémoire 56 contient un module logiciel 58 d'initialisation de spécifications de mission, propre à acquérir des spécifications opérationnelles de la mission à partir notamment de l'interface 42, et comportant un module logiciel 60 de récupération d'un contexte météorologique à partir de la base de données 50, et un module logiciel 62 de détermination de performances avion, en fonction des spécifications de mission, du contexte météorologique et du contexte avion.

Selon l'invention, la mémoire 56 contient également un premier module logiciel 64 de calcul d'une première trajectoire de mission optimale 64A, en fonction des performances avion déterminées, du contexte météorologique et des spécifications de mission, le premier module de calcul 64 étant propre à calculer la première trajectoire optimale de mission 64A de manière non contrainte par un réseau de points de passage 53A et/ou de trajectoires 53B imposées entre les points de passage 53A.

Avantageusement, comme décrit dans la demande française n°1800734 la mémoire 56 contient aussi un module 63 de définition, autour de la première trajectoire optimale de mission 64A, d'une région d'optimisation 63A de la trajectoire optimale 64A et un deuxième module 65 de calcul d'une trajectoire optimisée 65A de l'aéronef dans la région d'optimisation 63A, de manière contrainte par un réseau de points de passages 53A et/ou de trajectoires 53B imposées entre les points de passage 53A.

Le module d'initialisation 58 est propre à acquérir les spécifications opérationnelles de la mission à partir de l'interface 42, et/ou du système de gestion et de suivi 16.

Le module de récupération 60 est propre à interroger la base de données météorologique 50 pour obtenir notamment les vitesses et les directions du vent dans le volume de mission s'étendant entre le point d'origine 18 et le point de destination 20, à plusieurs niveaux de vol.

Le module de détermination 62 comporte une application logicielle 66 de détermination du poids et de l'équilibre de l'aéronef, destinée à déterminer le centre de gravité de l'aéronef, une application logicielle 68 de détermination de performances haute vitesse, et avantageusement une application logicielle 70 de détermination de performances basse vitesse.

L'application 66 de détermination du poids et de l'équilibre de l'aéronef est propre à déterminer la position du centre de gravité de l'aéronef en l'absence de carburant dans l'aéronef (ou « Zero Fuel Weight Center of Gravity ») et la masse de l'aéronef en l'absence de carburant dans l'aéronef (ou « Zero Fuel Weight»), en fonction de la masse à vide de l'aéronef, des équipements embarqués dans l'aéronef, des passagers et/ou du fret embarqué, et de leur position dans l'aéronef, ainsi qu'une surveillance du domaine de vol de l'avion (diagramme masse - centrage).

L'application de détermination de performances haute vitesse 68 est propre à déterminer la masse de carburant à embarquer dans l'aéronef sur une trajectoire donnée, par exemple une trajectoire orthodromique 90 (voir figure 12) entre le point d'origine 18 et le point de destination 20, en utilisant la position du centre de gravité et la masse de l'aéronef en l'absence de carburant dans l'aéronef (ou « Zero Fuel Weight») déterminées par l'application 66, une vitesse air prédéterminée, par exemple saisie ou calculée à partir des données saisies par l'interface utilisateur 42, le contexte météorologique récupéré à partir du module 60, notamment des vitesses de vent et des températures et éventuellement le contexte avion, par exemple le type et l'âge des moteurs, récupéré à partir du module d'initialisation 58.

L'application de détermination de performances haute vitesse 68 comporte en outre des fonctions de calcul de consommation instantanée de carburant et de variation de la masse avion instantanée au cours d'une trajectoire, utilisant avantageusement la position du centre de gravité et la masse de l'aéronef en l'absence de carburant dans l'aéronef, une vitesse air prédéterminée, par exemple saisie ou calculée à partir des données saisies par l'interface utilisateur 42, le contexte météorologique récupéré à partir du module 60, notamment des vitesses de vent et des températures et éventuellement le contexte avion, par exemple le type et l'âge des moteurs, récupéré à partir du module d'initialisation 58.

L'application de détermination de performances haute vitesse 68 comporte également une fonction de détermination des niveaux de vol atteignables en fonction de la vitesse air prédéterminée, du contexte météorologique, et éventuellement du contexte avion.

Ces fonctions de calcul de consommation instantanée, de variation de la masse avion instantanée et de détermination des niveaux de vol atteignables sont propres à être appelées par le module de calcul 64 pour le calcul des courbes d'iso-déplacement.

L'application de détermination de performances basse vitesse 70 est propre à déterminer notamment la masse maximale de l'aéronef (et le carton de décollage) permettant à l'aéronef de décoller et/ou d'atterrir sur un terrain, en fonction de données de longueurs de pistes récupérées à partir de la base de données 52, et du contexte météorologique récupéré à partir du module 60.

Selon l'invention, le premier module de calcul 64 est configuré pour calculer, à partir d'au moins un point choisi 78 accessible à l'aéronef, une pluralité de courbes d'iso-déplacement 79, 80, 81 correspondant chacune à un déplacement de l'aéronef à un palier de vol distinct (par exemple FL300, FL350, FL400), après un ou plusieurs incréments de déplacement. Le nombre de paliers est égal à 3 dans l'exemple représenté. En pratique, le nombre de paliers est supérieur ou égal à 2 et est par exemple compris entre 2 et 20 avantageusement entre 6 et 20.

Le premier module de calcul de 64 est propre à déterminer, sur la base des courbes d'iso-déplacement 79, 80, 81 obtenues à un même intervalle de déplacement correspondant à plusieurs incréments de déplacement à différents paliers de vol FL300, FL350, FL400, au moins une courbe d'iso-déplacement étendue 83, maximisant le déplacement effectué à partir du point géographique d'origine 18 ou minimisant le déplacement à effectuer jusqu'au point géographique de destination 20.

Le premier module de calcul 64 est en outre propre à calculer au moins une trajectoire optimale 64A entre le point d'origine 18 et le point de destination 20 sur la base des courbes d'iso-déplacement étendues 83.

Le point accessible choisi 78 est initialement le point géographique d'origine 18, comme illustré par la figure 2. En variante, le point accessible choisi est un point de fin de montée à partir du point géographique d'origine 18.

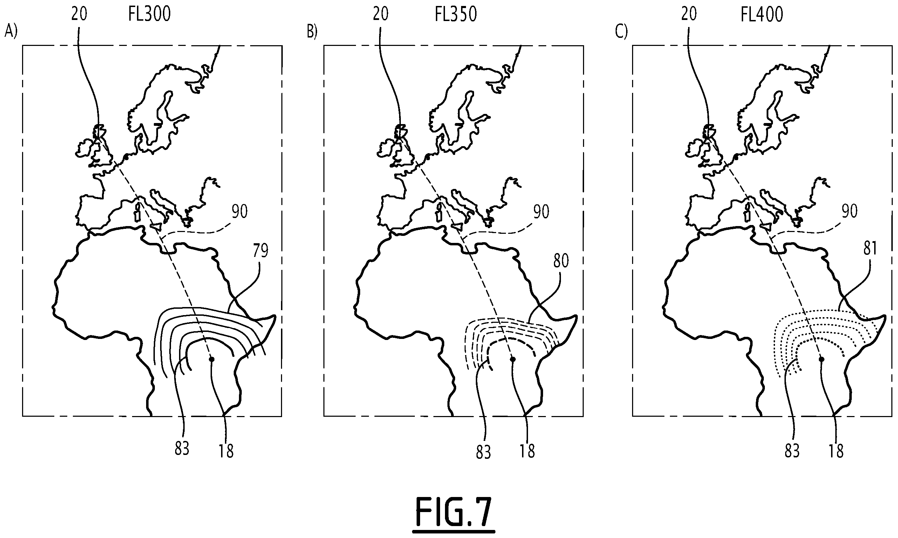

Une fois au moins une courbe d'iso-déplacement étendue 83 obtenue, chaque courbe d'iso-déplacement 79, 80, 81 est obtenue à partir de points accessibles 78 situés sur la courbe d'iso-déplacement étendue 83, comme illustré par la figure 7.

Dans l'exemple illustré par les figures, le premier module de calcul 64 est propre, à partir du point géographique d'origine 18 ou de tout point d'une courbe d'iso-déplacement étendue 83 d'établir au moins une courbe d'iso-déplacement 79, 80, 81 sur un incrément de temps prédéterminé à partir du point choisi, en tenant compte de la vitesse air choisie, du contexte météorologique, des performances avion déterminées par fonctions de calcul de l'application 68, et des spécifications opérationnelles définies par le module d'initialisation 58.

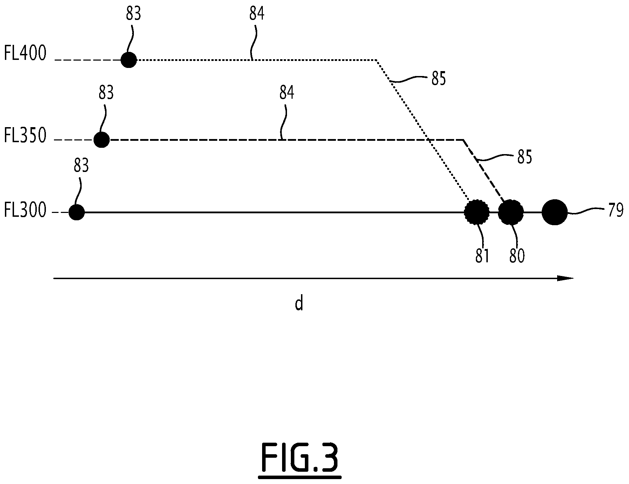

En référence à la figure 3, les courbes d'iso-déplacement 79, 80, 81 sont obtenues pour un niveau de vol donné, ici FL300, pour des déplacements de l'aéronef en palier à des niveaux de vol de départ FL300, FL350, FL400 égaux ou distincts du niveau de vol donné FL300 à partir d'un point accessible ici situé sur une courbe d'iso-déplacement 83 du niveau de vol de départ FL300, FL350, FL400 respectif.

Ainsi, la courbe d'iso-déplacement 79 est obtenue en faisant évoluer l'aéronef à un palier constant correspondant au niveau de vol donné FL300, à partir d'un point accessible sur la courbe d'iso-déplacement étendue 83 au niveau de vol de départ FL300 qui correspond au niveau de vol donné FL300.

Les courbes d'iso-déplacement 80 et 81 sont obtenues en effectuant une phase 84 de vol en palier à un niveau de vol de départ FL350, FL400 distinct du niveau de vol donné FL300, en partant de la courbe d'iso-déplacement 83 au niveau de vol de départ FL350, FL400 respectif, puis une phase d'atteinte 85 du niveau de vol donné FL300.

La phase d'atteinte 85 comprend par exemple une montée ou une descente suivant un profil prédéterminé, par exemple à pente constante, à vitesse vraie (ou « True Air Speed ») constante ou à Mach constant pour atteindre le niveau de vol donné FL300 à partir du vol en palier effectué à un niveau de vol FL350, FL400 distinct du niveau de vol donné FL300.

Avantageusement, pour un intervalle de déplacement donné correspondant à plusieurs incréments de déplacement, le module de calcul 64 est propre à déterminer un incrément intermédiaire à partir duquel la phase d'atteinte 85 démarre, en déterminant par exemple le temps nécessaire pour atteindre le niveau de vol donné FL300 depuis le niveau de vol de départ FL350, FL400 respectif.

Cet incrément intermédiaire est déterminé en fonction du profil de vol prédéterminé dans la phase 85, en tenant compte de la vitesse air choisie, du contexte météorologique, des performances avion déterminées par les fonctions de calcul des applications 66 et 68, et des spécifications opérationnelles définies par le module d'initialisation 58.

Le module de calcul 64 est ensuite propre à déterminer une courbe d'iso-déplacement intermédiaire, à l'incrément intermédiaire, pour un vol en palier au niveau de vol de départ FL350, FL400, puis à définir les courbes d'iso-déplacement 80, 81 au niveau de vol donné FL300 issues de la phase d'atteinte 85, à l'intervalle de déplacement, à partir de la courbe d'iso-déplacement intermédiaire définie précédemment.

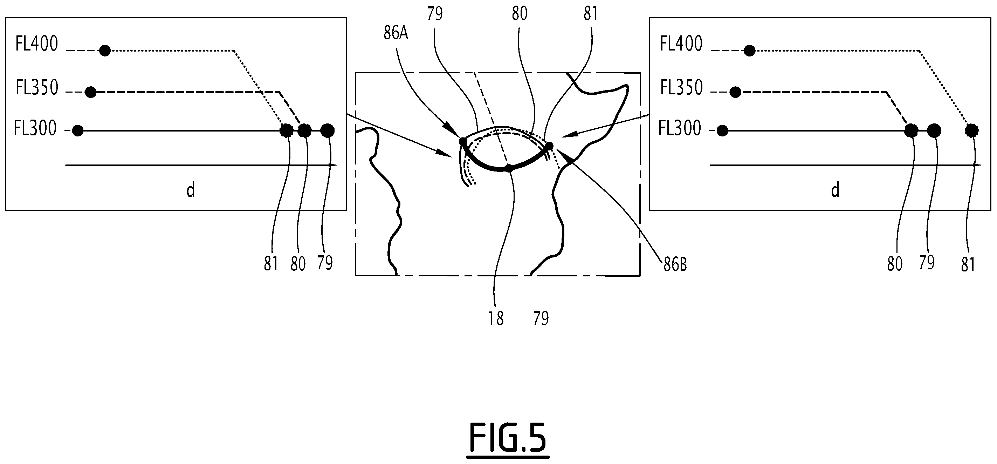

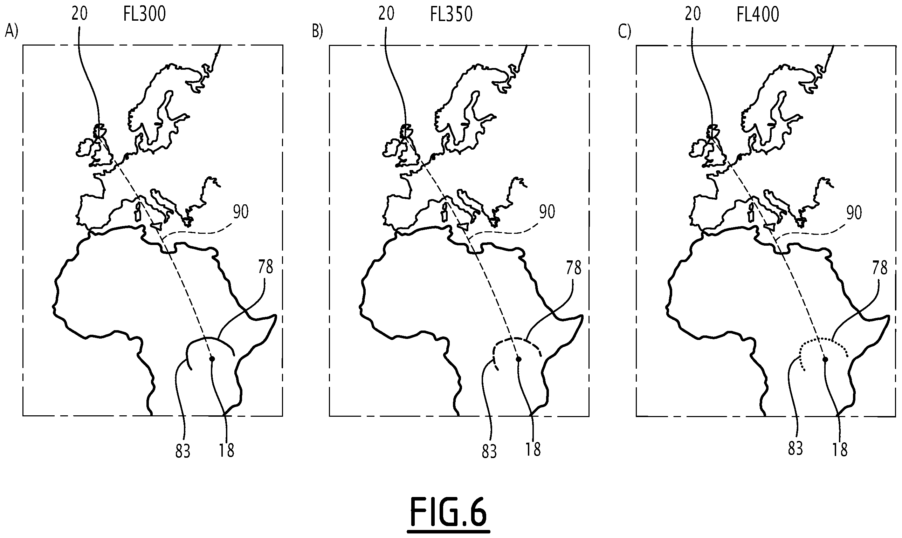

Comme illustré par la figure 5 et par la figure 6, la courbe d'iso-déplacement étendue 83 est obtenue en superposant les courbes d'iso-déplacement 79, 80, 81 obtenues au même intervalle de déplacement, puis en déterminant le lieu des points sur les courbes d'iso-déplacement 79, 80, 81 maximisant la distance parcourue depuis le point géographique de départ 18 ou minimisant la distance à parcourir vers le point géographique d'arrivée 20.

Ainsi, dans une première direction, à gauche sur la figure 5, le point 86A le plus éloigné du point choisi 78 est situé sur la courbe d'iso-déplacement 79 correspondant à un vol en palier au niveau de vol donné FL300. Au contraire, dans la direction à droite sur la figure 5, le point 86B le plus éloigné du point choisi 78 est un point de la courbe d'iso-déplacement 81 correspondant à un déplacement de l'aéronef en palier à un niveau de vol FL400 distinct du niveau de vol donné FL300, et puis en descente suivant le profil prédéterminé vers le niveau de vol donné FL300.

Les points 86A, 86B de la courbe d'iso-déplacement étendue 83 ainsi formée sont donc situés avantageusement sur plusieurs courbes d'iso-déplacement 79, 80, 81 pour maximiser la distance totale parcourue depuis le point géographique d'origine 18 ou pour minimiser la distance totale vers le point géographique de destination 20.

Le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Le module de calcul 24 est propre à exclure également les points qui ne seraient pas situés dans une zone de couverture satellite 32.

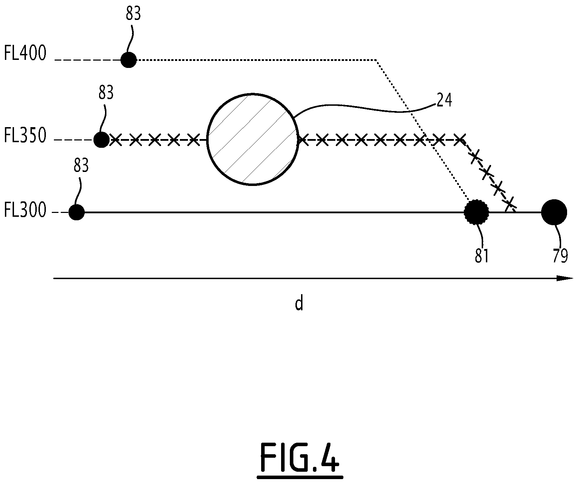

Les évitements réalisés des zones quadridimensionnelles définies sont illustrés par exemple sur la figure 13 en section dans le plan horizontal, et sur la figure 4 en section dans le plan vertical.

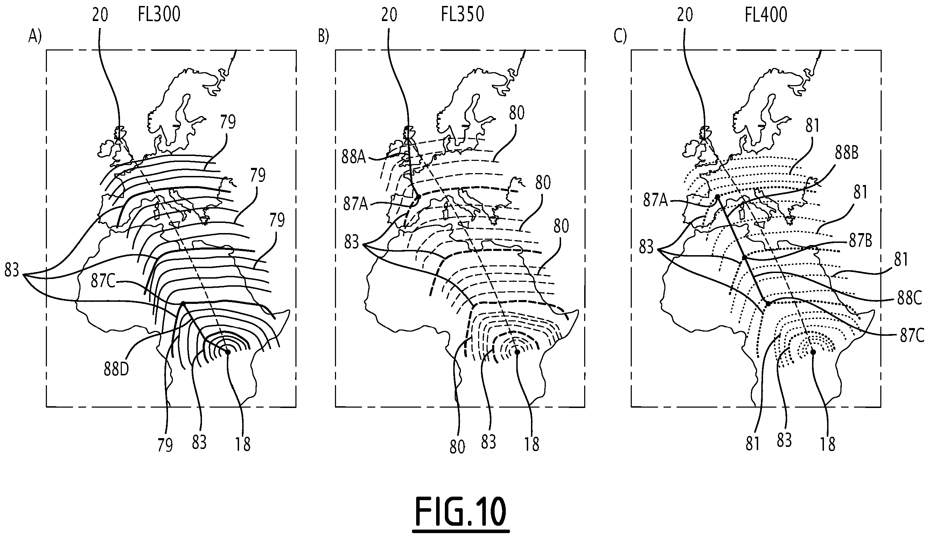

Comme visible sur la figure 10, le premier module de calcul 64 est propre à déterminer une pluralité de courbes d'iso-déplacement étendues 83 successives, obtenues à des intervalles de temps successifs, à partir de courbes d'iso-déplacement 79, 80, 81 correspondant chacune à un ou plusieurs incréments de temps au sein de chaque intervalle de déplacement.

Avantageusement, comme représenté sur la figure 10, le premier module de calcul 64 est propre à déterminer les courbes d'iso-déplacement étendues 83 successives à plusieurs niveaux de vol FL300, FL350, FL400.

Le premier module de calcul 64 est propre à choisir une trajectoire optimale 64A en se fondant sur les courbes d'iso-déplacement étendues 83 calculées.

En référence à la figure 13, le premier module de calcul 64 est propre à déterminer chaque point de la trajectoire optimale 64A de manière non contrainte par un réseau de points de passage 53A et/ou de trajectoires 53B imposées entre les points de passage 53A.

Ainsi, la détermination de la trajectoire optimale 64A par le premier module de calcul 64 est mise en œuvre comme si l'aéronef était apte à effectuer un vol libre en tenant compte des spécifications de mission, mais sans tenir compte du réseau de points de passage 53A et/ou de trajectoires 53B imposées entre les points de passage 53A qui sont définis par les autorités de contrôle aérien.

En référence à la figure 10, la trajectoire optimale 64A est déterminée de préférence à partir du point géographique de destination 20, ou d'un point de début de descente vers le point 20, en remontant les courbes d'iso-déplacement 80 au niveau de vol final FL350 ayant permis d'atteindre en premier le point géographique de destination 20 ou le point de début de descente, jusqu'au point 87A de la courbe d'iso-déplacement étendue 83 correspondant au dernier intervalle de déplacement composé de plusieurs incréments d'iso-déplacement. Ceci définit une première section de trajectoire 88A.

Le point 87A de la courbe d'iso-déplacement étendue 83 correspond à un point d'une courbe d'iso-déplacement 79, 80, 81 qui résulte soit d'un vol en palier au même niveau de vol que le niveau de vol final FL350, soit d'une phase 84 de palier à un niveau de vol FL300, FL400 différent du niveau de vol final FL350 et d'une phase 85 d'atteinte du niveau de vol final.

Dans le deuxième cas, représenté à droite sur la figure 10, les courbes d'iso-déplacement 81 à un niveau de vol distinct FL400 sont ensuite remontées jusqu'au point 87B de la courbe d'iso-déplacement étendue 83 adjacente au même niveau de vol FL400 à partir duquel le point 87A avait été obtenu. Ceci définit une deuxième section de trajectoire 88B.

Dans le premier cas, représenté par le point 87B sur la figure 10, les courbes d'iso-déplacement 80 au même niveau de vol FL400 sont remontées jusqu'au point 87C de la courbe d'iso-déplacement étendue 83 adjacente au même niveau de vol FL400 à partir duquel le point 87B avait été obtenu. Ceci définit une troisième section de trajectoire 88C. Le point 87C a ici été obtenu à partir d'une phase 84 de vol en palier au niveau de vol FL300 suivie d'une phase 85 de montée au niveau de vol FL400.

Ce mécanisme est répété jusqu'à atteindre le point géographique d'origine 18, comme illustré à gauche sur la figure 10.

Le premier module de calcul 64 est propre à définir ainsi une trajectoire optimale 64A non seulement dans le plan horizontal, mais également dans le plan vertical.

Le profil de trajectoire dans le plan vertical est illustré sur la figure 11 et comprend une pluralité de sections de trajectoire 88A à 88D. Chaque section de trajectoire 88A, 88B, 88C est déterminée depuis ou/et à partir d'une courbe d'iso-déplacement étendue 83, et comprend soit une phase de palier 84 unique, soit une phase de palier 84, et une phase 85 d'atteinte d'un autre palier.

Le profil de trajectoire dans le plan horizontal est illustré sur la figure 12.

Dans cet exemple, des courbes d'iso-déplacement sont avantageusement des courbes isochrones. Par définition, une courbe isochrone est une courbe reliant les points accessibles à l'aéronef à partir d'un point donné (qui peut être le point d'origine 18 ou un point sur une courbe isochrone étendue 83) en un temps donné qui correspond à un ou plusieurs incréments de temps. Chaque incrément de temps est par exemple compris entre 1 minute et 1 heure, notamment entre 2 minutes et 10 minutes, par exemple 5 minutes.

Dans cet exemple, chaque courbe isochrone est déterminée à partir d'un point donné en calculant à partir du point donné tous les points accessibles à l'aéronef, à une vitesse air donnée, en tenant compte du contexte météorologique, notamment de la direction et de l'intensité du vent, telles que fournies par le module de récupération 60 et des performances avion, telles que déterminées par les fonctions de calcul de l'application 68.

Avantageusement, le module de calcul 64 est propre à calculer une succession de courbes isochrones 79, 80, 81 à plusieurs paliers de vols, et des courbes isochrones étendues 83 à partir des courbes isochrones 79, 80, 81 obtenues pour un même intervalle de temps.

En référence à la figure 13, le module de définition 63 est avantageusement propre à définir la région d'optimisation 63A de la trajectoire en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 est propre à délimiter latéralement la région d'optimisation 63A de la trajectoire 64A par des limites latérales s'étendant latéralement à une distance choisie en fonction de la densité du réseau aérien de chaque point de la trajectoire optimale 64A.

Cette distance choisie est généralement inférieure à 1852 km (1000 miles nautiques ou « nm ») et peut être comprise entre 185 km (100 nm) et 926 km (500 nm) dans un réseau de faible densité, par exemple en Afrique, et entre 183 km (99 nm) et 55 km (30 nm) dans un réseau de forte densité comme en Europe.

Ainsi, la région d'optimisation 63A est définie généralement par une bande englobant la trajectoire 64A. La bande est potentiellement contrainte également par des zones de vol interdites 24, par des zones 28 de phénomènes météorologiques dangereux et/ou par des zones de turbulences 30. Elle englobe selon le cas des zones de couverture satellite 32.

Le deuxième module de calcul 65 de trajectoires 65A comporte une application 92 de définition d'un réseau de nœuds entre le point géographique d'origine 18 et le point géographique de destination 20 à partir du réseau de points de passages 53A et/ou de trajectoires 53B imposées entre les points de passage 53A, et une application 93 de définition d'un coût associé au passage d'un nœud à un nœud adjacent parmi les nœuds du réseau.

Le deuxième module de calcul 65 comporte également une application 98 de détermination de la trajectoire optimisée 65A dans le réseau de nœuds sur la base d'une minimisation du coût total cumulé entre le point géographique d'origine 18 et le point géographique de destination 20.

L'application de définition 92 est propre à charger les coordonnées de points de passage 53A et de trajectoires 53B imposées entre les points de passage 53A à partir de la base de données 52, au sein de la région d'optimisation 63A.

L'application de définition 92 est propre à définir, parmi les points de passage 53A, les nœuds qui sont les points de passage 53A possibles pour l'aéronef en tenant compte notamment des contraintes de mission, en particulier des contraintes de navigation, des contraintes météorologiques, et des contraintes de confort passager, telles que définies plus haut.

L'application de définition 93 est propre à définir le coût associé au passage entre deux nœuds adjacents sur la base de la distance géographique séparant les deux nœuds et également du contexte météorologique récupéré à partir du module 60, en particulier du contexte météorologique évolutif et éventuellement du contexte avion, par exemple le type et l'âge des moteurs, récupéré à partir du module d'initialisation 58.

L'application de détermination 98 de la trajectoire optimisée 65A est propre à mettre en œuvre un algorithme de minimisation du coût pour définir la trajectoire la moins coûteuse dans la région d'optimisation 63A passant par les nœuds et par les trajectoires imposées entre les nœuds, depuis le point géographique d'origine 18 jusqu'au point géographique de destination 20.

L'algorithme est par exemple un algorithme de Dijkstra et/ou un algorithme A*. L'algorithme de Dijkstra prend en entrée le réseau pondéré défini plus haut entre le point géographique d'origine 18 et le point géographique de destination 20.

Une description de l'utilisation de l'algorithme de Dijkstra est donnée dans la demande de brevet en France n°1800734.

Une description de l'algorithme A* est par exemple donnée dans l'article téléchargeable à l'adresse suivante : https://fr.wikipedia.org/wiki/Algorithme_A*.

Une fois la trajectoire optimisée 65A obtenue, le moteur de calcul 40 est avantageusement propre à déterminer au moins un paramètre de mission de l'aéronef correspondant à la trajectoire optimisée 65A.

Le paramètre de mission est par exemple une masse totale au décollage de l'aéronef. Cette masse au décollage est calculée à chaque itération par le module de calcul 64 puis par le module de calcul 65, sur la base de la consommation estimée sur la trajectoire entre le point d'origine 18 et le point de destination 20, calculée à l'aide des fonctions de calcul de la consommation instantanée de carburant et de variation de la masse avion instantanée, et sur la base d'une charge en passagers et en fret prédéfinie dans les spécifications opérationnelles.

Le moteur de calcul 40 est ensuite propre à effectuer des itérations de calcul utilisant successivement les modules 64, 65, en déterminant, dans chaque itération, une nouvelle trajectoire optimale 64A à l'aide du premier module de calcul 64 en calculant des nouvelles courbes d'iso-déplacement étendues 83, une nouvelle région d'optimisation 63A à l'aide du module de détermination 63, puis une nouvelle trajectoire optimisée 65A à l'aide du deuxième module de calcul 65, jusqu'à atteindre une convergence sur la valeur du paramètre de mission.

Une fois la convergence obtenue, le moteur de mission 40 est propre à vérifier la cohérence des performances grande vitesse à l'aide de l'application 66. Le moteur de mission 40 est propre à vérifier notamment que la masse au décollage obtenue à l'aide des modules de calcul 64, 65 après convergence est inférieure ou égale à la masse maximale permettant à l'aéronef de décoller obtenue à l'aide de l'application basse vitesse 70 pour s'assurer que l'aéronef pourra décoller sur le terrain choisi pour le décollage.

Une fois la trajectoire optimisée 65A finale obtenue, le deuxième module de calcul 65 fournit un fichier de données comprenant une liste de points de passage 53A, et une liste de trajectoires 53B entre les points de passage 53A.

Le fichier de données fourni par le deuxième module de calcul 65 comporte en outre avantageusement une liste de caps TCA entre les points de passage 53A, une liste de distances DST entre les points de passage 53A, une liste de composantes de vent COMP entre les points de passage 53A, une liste de vitesses vraies TAS entre les points de passage 53A, une liste de vitesses sol GS entre les points de passage 53A, une liste de températures air statique SAT entre les points de passage 53A, une liste de niveaux de turbulence SHR entre les points de passage 53A, une liste de temps estimés d'arrivée ETA à un point de passage 53A, et une liste de temps estimés en route EET.

Ce fichier de données est propre à être récupéré par l'équipage et/ou à être chargé par saisie manuelle ou par transfert de données dans le système de conduite de vol 14, en vue d'être utilisé lors du vol.

Un procédé de calcul d'une mission, mis en œuvre à l'aide du système 10 selon l'invention, va maintenant être décrit.

Ce procédé est mis en œuvre par exemple lors de la préparation de la mission, pour établir sa faisabilité, pour préparer de manière plus précise la mission, ou pour tenir compte d'un changement de dernière minute dans une mission déjà préparée.

En variante, ce procédé est mis en œuvre lors du suivi de la mission, ou pour tester des hypothèses de modification de la mission, pour l'optimiser, ou pour la reconfigurer.

Initialement, l'utilisateur, notamment l'équipage, saisit au moins une partie des spécifications opérationnelles à l'aide de l'interface de paramétrage 42. L'utilisateur définit par exemple pour chaque étape de la mission, le point géographique d'origine 18, le point géographique de destination 20 et éventuellement, un nombre de passagers à transporter, une vitesse air souhaitée, un horaire de départ et/ou un horaire d'arrivée imposé, une distance maximale à parcourir.

Puis, lorsqu'il souhaite définir une trajectoire possible, il active le moteur de calcul 40. Le module d'initialisation 58 récupère les spécifications opérationnelles à partir notamment de l'interface 42 pour obtenir toutes les informations sur chaque étape de la mission.

Le module d'initialisation 58 récupère avantageusement d'autres spécifications opérationnelles à partir du système de gestion et de suivi 16 de l'aéronef.

Cette étape initialise les spécifications opérationnelles liées au contexte de mission et au contexte avion, par exemple la présence de pannes ou d'autorisations à partir. Cette étape initialise également les spécifications opérationnelles de confort passager, notamment en termes de connectivité et de niveau de turbulences. Cette étape de spécification des données météo acceptable est avantageusement faite au niveau de l'interface utilisateur 42.

L'initialisation est faite avantageusement en considérant une trajectoire purement orthodromique en atmosphère standard (données de vol « parfaites »).

Puis, le module 60 de récupération du contexte météorologique interroge la base de données météorologique 50 pour obtenir notamment les vitesses et les directions du vent entre le point d'origine 18 et le point de destination 20, à plusieurs niveaux de vol.

Le module de détermination de performances avion 62 est alors activé. L'application 66 de détermination du poids et de l'équilibre détermine la masse de l'aéronef et la position du centre de gravité de l'aéronef en l'absence de carburant dans l'aéronef (« Zero Fuel Weight » et « Zero Fuel Weight Center of Gravity »), en fonction de la masse à vide de l'aéronef, des équipements embarqués dans l'aéronef, des passagers et/ou du fret embarqué, et de leur position dans l'aéronef.

Sur cette base, sur la base du contexte météorologique récupéré par le module de récupération 60, sur la base du contexte avion récupéré à partir du module d'initialisation 58, et sur la base de la vitesse air souhaitée, l'application de détermination de performances haute vitesse 68 détermine une trajectoire initiale 90 de l'aéronef et la consommation de l'aéronef associée en utilisant la position du centre de gravité déterminée par l'application 66.

L'application 68 calcule alors l'ensemble des paramètres de mission, en particulier la route, l'heure d'arrivée, le profil de vol, et la consommation en carburant, ce qui permet d'en déduire notamment la masse au décollage.

Le premier module de calcul 64 calcule alors à partir d'au moins un point choisi 78 accessible à l'aéronef, une pluralité de courbes d'iso-déplacement 79, 80, 81 correspondant chacune à un déplacement de l'aéronef à un palier de vol distinct (par exemple FL300, FL350, FL400), après un ou plusieurs incréments de déplacement.

Le premier module de calcul 64 détermine ensuite sur la base des courbes d'iso-déplacement 79, 80, 81 obtenues à un même intervalle de déplacement correspondant à plusieurs incréments de déplacement à différents paliers de vol FL300, FL350, FL400, au moins une courbe d'iso-déplacement étendue 83, maximisant le déplacement effectué à partir du point géographique d'origine 18 ou minimisant le déplacement à effectuer vers le point géographique de destination 20.

Le premier module de calcul 64 calcule alors au moins une trajectoire optimale 64A entre le point d'origine 18 et le point de destination 20 sur la base des courbes d'iso-déplacement étendues 83.

Le point accessible choisi 78 est initialement le point géographique d'origine 18, comme illustré par la figure 2. En variante, le point accessible choisi est un point de fin de montée à partir du point géographique d'origine 18.

Une fois au moins une courbe d'iso-déplacement étendue 83 obtenue, chaque courbe d'iso-déplacement 79, 80, 81 est obtenue à partir de points accessibles 78 situés sur la courbe d'iso-déplacement étendue 83, comme illustré par la figure 7.

Dans l'exemple illustré par les figures, à partir du point géographique d'origine 18 ou de tout point d'une courbe d'iso-déplacement étendue 83 le premier module de calcul 64 établit au moins une courbe d'iso-déplacement 79, 80, 81 sur un incrément de temps prédéterminé à partir du point choisi, en tenant compte de la vitesse air choisie, du contexte météorologique, des performances avion déterminées par les fonctions de calcul de consommation instantanée de carburant et de variation de la masse avion instantanée et de détermination des niveaux de vol atteignables décrites plus haut, et des spécifications opérationnelles définies par le module d'initialisation 58.

Le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Le module de calcul 24 est propre à exclure également les points qui ne seraient pas situés dans une zone de couverture satellite 32.

En référence à la figure 3, les courbes d'iso-déplacement 79, 80, 81 sont obtenues pour un niveau de vol donné, ici FL300, pour des déplacements de l'aéronef à des paliers à des niveaux de vol de départ FL300, FL350, FL400 égaux ou distincts du niveau de vol donné FL300 à partir d'un point accessible ici situé sur une courbe d'iso-déplacement 83 du niveau de vol de départ FL300, FL350, FL400 respectif.

Ainsi, sur la figure 3, la courbe d'iso-déplacement 79 est obtenue en faisant évoluer l'aéronef à un palier constant correspondant au niveau de vol donné FL300, à partir d'un point accessible sur la courbe d'iso-déplacement étendue 83 au niveau de vol de départ FL300 qui correspond au niveau de vol donné FL300.

Les courbes d'iso-déplacement 80 et 81 sont obtenues en effectuant une phase 84 de vol en palier à un niveau de vol de départ FL350, FL400 distinct du niveau de vol donné FL300, en partant de la courbe d'iso-déplacement 83 au niveau de vol de départ FL350, FL400 respectif, puis une phase d'atteinte du niveau de vol donné FL300.

La phase d'atteinte 85 comprend par exemple une montée ou une descente suivant le profil prédéterminé pour atteindre le niveau de vol donné FL300 à partir du vol en palier effectué à un niveau de vol FL350, FL400 distinct du niveau de vol donné FL300.

Avantageusement, pour un intervalle de déplacement donné correspondant à plusieurs incréments de déplacement, le module de calcul 64 détermine un incrément intermédiaire à partir duquel la phase d'atteinte 85 démarre, en déterminant par exemple le temps nécessaire pour atteindre le niveau de vol donné FL300 depuis le niveau de vol de départ FL350, FL400 respectif. Cet incrément intermédiaire est déterminé en fonction du profil de vol prédéterminé dans la phase 85, en tenant compte de la vitesse air choisie, du contexte météorologique, des performances avion déterminées par fonctions de calcul des applications 66 et 68, et des spécifications opérationnelles définies par le module d'initialisation 58.

Le module de calcul 64 détermine ensuite une courbe d'iso-déplacement intermédiaire, à l'incrément intermédiaire pour un vol en palier au niveau de vol de départ FL350, FL400, puis définit la courbe d'iso-déplacement 80, 81 au niveau de vol donné FL300 issue de la phase d'atteinte 85, à l'intervalle de déplacement, à partir de la courbe d'iso-déplacement intermédiaire définie précédemment.

Comme illustré par la figure 5 et par la figure 6, la courbe d'iso-déplacement étendue 83 est obtenue en superposant les courbes d'iso-déplacement 79, 80, 81 obtenues au même intervalle de déplacement, puis en déterminant le lieu des points sur les courbes d'iso-déplacement 79, 80, 81 maximisant la distance parcourue depuis le point géographique de départ 18.

Les points 86A, 86B de la courbe d'iso-déplacement étendue 83 ainsi formée sont donc situés avantageusement sur plusieurs courbes d'iso-déplacement 79, 80, 81 pour maximiser la distance parcourue depuis le point géographique d'origine 18 ou minimiser la distance à parcourir jusqu'au point géographique de destination 20.

Comme visible sur la figure 10, le premier module de calcul 64 détermine une pluralité de courbes d'iso-déplacement étendues 83 successives, obtenues à des intervalles de temps successifs, à partir de courbes d'iso-déplacement 79, 80, 81 correspondant chacune à un ou plusieurs incréments de temps au sein de chaque intervalle de déplacement.

Avantageusement, comme représenté sur la figure 10, le premier module de calcul 64 détermine les courbes d'iso-déplacement étendues 83 successives à plusieurs niveaux de vol FL300, FL350, FL400.

Le premier module de calcul 64 définit ensuite une trajectoire optimale 64A en se fondant sur les courbes d'iso-déplacement étendues 83 déterminées et une masse totale au décollage de l'aéronef correspondant à cette trajectoire optimale 64A.

Le premier module de calcul 64 détermine chaque point de la trajectoire optimale 64A de manière non contrainte par un réseau de points de passage 53A et/ou de trajectoires 53B imposées entre les points de passage 53A.

En référence à la figure 10, la trajectoire optimale 64A est déterminée de préférence à partir du point géographique de destination 20, ou d'un point de début de descente vers le point 20, en remontant les courbes d'iso-déplacement 80 au niveau de vol final FL350 ayant permis d'atteindre en premier le point géographique de destination 20 ou le point de début de descente, jusqu'au point 87A de la courbe d'iso-déplacement étendue 83 correspondant au dernier intervalle de déplacement composé de plusieurs incréments d'iso-déplacement. Ceci définit une première section de trajectoire 88A

Le point 87A de la courbe d'iso-déplacement étendue 83 correspond à un point d'une courbe d'iso-déplacement 79, 80, 81 qui résulte soit d'un vol en palier au même niveau de vol que le niveau de vol final FL350, soit d'une phase 84 de palier à un niveau de vol FL300, FL400 différent du niveau de vol final FL350 et d'une phase 85 d'atteinte du niveau de vol final.

Dans le deuxième cas, représenté à droite sur la figure 10, les courbes d'iso-déplacement 81 à un niveau de vol distinct FL400 sont ensuite remontées jusqu'au point 87B de la courbe d'iso-déplacement étendue 83 adjacente au même niveau de vol FL400 ayant permis d'atteindre le point 87A. Ceci définit une deuxième section de trajectoire 88B.

Dans le premier cas, représenté par le point 87B sur la figure 10, les courbes d'iso-déplacement 80 au même niveau de vol FL400 sont remontées jusqu'au point 87C de la courbe d'iso-déplacement étendue 83 adjacente au même niveau de vol FL400 ayant permis d'atteindre le point 87B. Ceci définit une troisième section de trajectoire 88C.

Ceci est répété jusqu'à atteindre le point géographique d'origine 18, comme illustré à gauche sur la figure 10.

La trajectoire optimale 64A et la masse correspondant de l'aéronef au décollage sont obtenues de manière simple, en limitant grandement le nombre de calculs et de tests à effectuer, grâce à l'utilisation des courbes d'iso-déplacement étendues 83.

Ces courbes 83 évitent en effet d'avoir à déterminer des combinaisons multiples de paliers de vol, en intégrant directement les points ayant conduit à la distance maximale parcourue indépendamment du profil de vol. En outre, la détermination intermédiaire des courbes d'iso-déplacement 79, 80, 81 tient compte des zones à éviter ou au contraire à favoriser tant dans le plan horizontal que dans le plan vertical.

Ainsi, le calcul de route et de performance est plus intégré, conduisant à moins d'itérations. Par ailleurs, la prise en compte des phases 85 d'atteinte de pallier par le premier module de calcul 84 rend le calcul plus performant et plus proche de la réalité.

Dans cet exemple, des courbes d'iso-déplacement 79, 80, 81 sont des courbes isochrones telles que définies plus haut. Chaque incrément de temps est par exemple compris entre 1 minute et 1 heure, notamment entre 2 minutes et 10 minutes, par exemple 5 minutes. Chaque intervalle de temps entre deux courbes d'iso-déplacement étendues 83 est alors défini avantageusement par au moins 3 incréments de temps, notamment par entre 4 et 20 incréments de temps.

Comme précisé plus haut, la trajectoire optimale 64A est obtenue à chaque itération de manière non contrainte par le réseau de points de passage 53A et/ou de trajectoires 53B imposées entre les points de passage 53A.

Puis à chaque itération, comme illustré sur la figure 13, le module de définition 63 définit avantageusement la région d'optimisation 63A de la trajectoire autour de la trajectoire optimale 64A en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 délimite latéralement la région d'optimisation 63A de la trajectoire 64A par des limites latérales s'étendant latéralement à une distance choisie en fonction de la densité du réseau aérien de chaque point de la trajectoire optimale 64A.

Ainsi, la région d'optimisation 63A est définie généralement par une bande englobant la trajectoire 64A. Comme indiqué précédemment, la bande est également potentiellement contrainte par les zones de vol interdites 24, par les zones 28 de phénomènes météorologiques dangereux et/ou par les zones de turbulences 30. Elle englobe selon le cas les zones de couverture satellite 32.

Ensuite, comme illustré par la figure 10, l'application de définition 92 charge les coordonnées de points de passage 53A et de trajectoires 53B imposées entre les points de passage 53A à partir de la base de données 52, au sein de la région d'optimisation 63A.

L'application de définition 92 définit, parmi les points de passage 53A, les nœuds 96 qui sont les points de passage 53A possibles pour l'aéronef en tenant compte notamment des contraintes de mission, en particulier des contraintes de navigation, des contraintes météorologiques, et des contraintes de confort passager.

L'application de définition 93 définit en outre le coût associé au passage entre deux nœuds adjacents 96 sur la base de la distance géographique séparant les deux nœuds 96, et également du contexte météorologique récupéré à partir du module 60, et éventuellement du contexte avion, par exemple le type et l'âge des moteurs, récupéré à partir du module d'initialisation 58.

L'application de détermination 98 de la trajectoire optimisée 65A met ensuite en œuvre un algorithme de minimisation du coût pour définir la trajectoire la moins coûteuse passant par les nœuds 96 et par les trajectoires imposées entre les nœuds 96, depuis le point géographique d'origine 18 jusqu'au point géographique de destination 20. Cet algorithme est par exemple par un algorithme de Dijkstra. Une trajectoire optimisée 65A est alors obtenue en minimisant le coût, comme décrit dans la demande de brevet n°1800734.

La trajectoire optimisée 65A obtenue à chaque itération est contrainte par un réseau de points de passages 53A et de trajectoires imposées 53B entre les points de passage 53A dans le réseau aérien.

Le moteur de calcul 40 calcule alors l'ensemble des paramètres de mission sur la base de la trajectoire optimisée 65A obtenue à l'itération courante, et détermine la différence entre le paramètre de mission à optimiser (par exemple la masse au décollage) pour la trajectoire initiale et le paramètre de mission à optimiser pour la trajectoire optimisée 65A.

Le moteur de calcul effectue alors de nouveaux calculs de trajectoires 64A, 65A, comme décrit précédemment, en utilisant les courbes d'iso-déplacement, jusqu'à ce que le paramètre de mission, ici la masse au décollage, converge vers une valeur de paramètres de mission souhaitée.

La convergence est par exemple déterminée lorsque la différence entre la valeur du paramètre de mission pour la trajectoire déterminée à l'itération précédente et celle déterminée à l'itération courante est inférieure à une valeur prédéterminée.

En particulier, dans le cas de la masse au décollage, la différence entre la masse au décollage pour la trajectoire déterminée à l'itération précédente et celle déterminée à l'itération courante doit être inférieure à une masse prédéterminée par exemple égale à 100 livres.

En variante, le paramètre de mission est la masse à l'atterrissage ou la distance parcourue le long de la trajectoire.

Avantageusement, après convergence, le moteur de mission 40 vérifie la cohérence des performances grande vitesse à l'aide de l'application 66.

Le moteur de mission 40 vérifie notamment que la masse au décollage obtenue à l'aide des modules de calcul 64, 65 après convergence est inférieure ou égale à la masse maximale permettant à l'aéronef de décoller obtenue à l'aide de l'application basse vitesse 70 pour s'assurer que l'aéronef pourra décoller sur le terrain choisi pour le décollage.

Plus généralement, l'application logicielle 70 de détermination de performances basse vitesse est mise en œuvre pour vérifier que les paramètres de mission obtenus sont compatibles avec les terrains sur lesquels l'aéronef est destiné à décoller et/ou à atterrir.

Le moteur de calcul 40 établit alors un fichier de données comprenant une liste de points de passage 53A, et une liste de trajectoires 53B entre les points de passage 53A.

Comme indiqué plus haut, le fichier de données fourni par le deuxième module de calcul 65 comporte en outre avantageusement une liste de caps TCA entre les points de passage 53A, une liste de distances DST entre les points de passage 53A, une liste de composantes de vent COMP entre les points de passage 53A, une liste de vitesses vraies TAS entre les points de passage 53A, une liste de vitesses sol GS entre les points de passage 53A, une liste de températures air statique SAT entre les points de passage 53A, une liste de niveaux de turbulence SHR entre les points de passage 53A, une liste de temps estimés d'arrivée ETA à un point de passage 53A, et une liste de temps estimés en route EET.

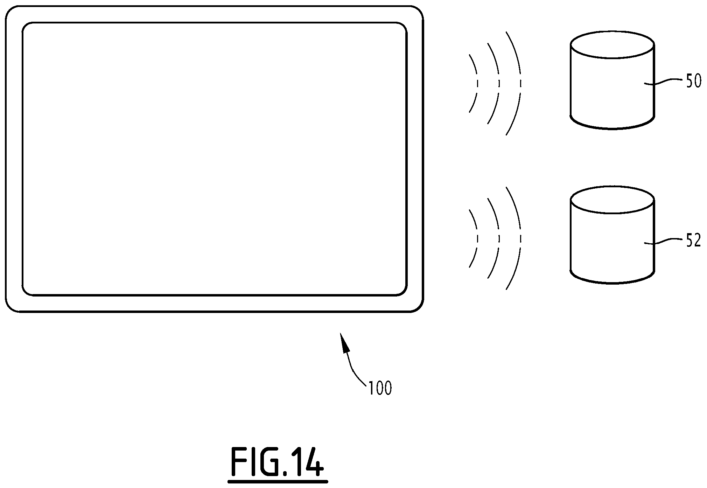

Dans la variante illustrée par la figure 14, le système de calcul de 10 est intégré au sein d'un bagage de vol électronique (« Electronic Flight Bag » ou « EFB » en anglais), ou d'un dispositif électronique portable 100.

Le dispositif électronique portable 100 est par exemple raccordé aux bases de données 50, 52 par une liaison de données sans fil suivant un protocole de transmission sans fil par exemple de type Wifi (par exemple suivant la Norme IEEE 802.11), ou Bluetooth (par exemple suivant la Norme IEEE 802.15-1-2005).

Dans une autre variante, chaque courbe d'iso-déplacement calculée par le module de calcul 64 est une courbe d'iso-consommation de carburant.

Le premier module de calcul 64 est propre, à partir de tout point choisi 78 accessible à l'aéronef d'établir une pluralité de courbes d'iso-consommation de carburant, correspondant à des paliers à des niveaux de vols distincts, sur un incrément de carburant consommé prédéterminé à partir du point choisi 78, puis à déterminer une courbe d'iso-consommation de carburant étendue à partir de la pluralité de courbes d'iso-consommation de carburant.

Par définition, une courbe d'iso-consommation de carburant est une courbe reliant les points accessibles à l'aéronef à partir d'un point donné 82 avec une consommation en carburant donnée qui correspond à un ou plusieurs incréments de carburant consommé. Chaque incrément de carburant consommé est choisi à une valeur constante par exemple comprise entre 22,7 kg (50 livres) et 453,6 kg (1000 livres), notamment entre 36,3 kg (80 livres) et 54,4 kg (120 livres).

Dans cet exemple, chaque courbe d'iso-consommation de carburant est déterminée à partir d'un point choisi 78 en calculant à partir du point choisi tous les points accessibles à l'aéronef, à une vitesse air donnée, en tenant compte du contexte météorologique, notamment de la direction et de l'intensité du vent, tels que fournies par le module de récupération 60 et des performances avion, telles que déterminées par le module de détermination 62.

Comme précédemment, le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Au contraire, le premier module de calcul 64 est propre à exclure également les points qui ne seraient pas situés dans une zone de couverture satellite 32.

Le premier module de calcul 64 est ensuite propre à définir une trajectoire optimale 64A en choisissant sur des courbes d'iso-consommation de carburant étendues successives des points successifs de la trajectoire optimale 64A.

Dans une autre variante, les courbes d'iso-déplacement sont des courbes d'iso-coût, le coût étant défini comme une fonction du temps de parcours et du carburant consommé, par exemple comme un rapport du temps de parcours et du carburant consommé.

Chaque incrément de déplacement est un incrément de coût d'une valeur donnée constante.

Chaque courbe d'iso-coût est déterminée à partir d'un point choisi 78 en calculant à partir du point choisi tous les points accessibles à l'aéronef, à une vitesse air donnée, en tenant compte du contexte météorologique, notamment de la direction et de l'intensité du vent, tels que fournies par le module de récupération 60 et des performances avion, telles que déterminées par les fonctions de calcul de l'application 68.

Comme précédemment, le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Au contraire, le premier module de calcul 64 est propre à exclure également les points qui ne seraient pas situés dans une zone de couverture satellite 32.

Le premier module de calcul 64 est ensuite propre à définir une trajectoire optimale 64A en choisissant sur des courbes d'iso-coût étendues successives des points successifs de la trajectoire optimale 64A.

Dans encore une autre variante de tous les modes de réalisation précédemment décrits, les courbes d'iso-déplacement ne sont pas déterminées à une vitesse air donnée, mais suivant un profil déterminé de vitesse air, par exemple en fonction de l'altitude ou encore à poussée maximale.

## Revendications

1. Système (10) de calcul de mission d'un aéronef, comportant un moteur de calcul (40) de trajectoires de l'aéronef lors de la mission, le moteur de calcul (40) comprenant :
- un premier module de calcul (64) de trajectoires, propre à calculer une trajectoire optimale de mission (64A) entre un point géographique d'origine (18) et un point géographique de destination (20), en fonction de performances avion, de spécifications opérationnelles de mission et d'un contexte météorologique, de préférence évolutif, dans un volume de mission entre le point géographique d'origine (18) et le point géographique de destination (20),
le premier module de calcul (64) de trajectoire étant propre à calculer une pluralité de courbes d'iso-déplacement (79, 80, 81) à partir d'au moins un point choisi (78) accessible à l'aéronef, à un intervalle de déplacement correspondant à plusieurs incréments de déplacement successifs de l'aéronef depuis le point choisi (78),
la courbe d'iso-déplacement (79, 80, 81) étant une courbe isochrone reliant les points accessibles à l'aéronef à partir d'un point donné en un temps donné qui correspond à un ou plusieurs incréments de temps, le premier module de calcul (64) de trajectoire étant propre à calculer une trajectoire minimisant le temps entre le point géographique d'origine (18) et le point géographique de destination (20),
ou dans lequel chaque courbe d'iso-déplacement (79, 80, 81) est une courbe d'iso-consommation de carburant reliant les points accessibles à l'aéronef à partir d'un point donné avec une consommation en carburant donnée qui correspond à un ou plusieurs incréments de carburant consommé, le premier module de calcul (64) de trajectoire étant propre à calculer une trajectoire minimisant la consommation de carburant entre le point géographique d'origine (18) et le point géographique de destination (20),
ou dans lequel chaque courbe d'iso-déplacement (79, 80, 81) est une courbe d'iso-coût, le coût étant défini comme une fonction du temps de parcours et du carburant consommé, chaque incrément de déplacement étant un incrément de coût d'une valeur donnée constante, le premier module de calcul (64) de trajectoire étant propre à calculer une trajectoire minimisant le coût entre le point géographique d'origine (18) et le point géographique de destination (20),
**caractérisé en ce que**:
les courbes d'iso-déplacement (79, 80, 81) sont obtenues à l'intervalle de déplacement pour un déplacement de l'aéronef jusqu'à un niveau de vol donné à partir de déplacements de l'aéronef à des paliers de vol distincts,
et le premier module de calcul (64) de trajectoire est propre à déterminer, sur la base des courbes d'iso-déplacement (79, 80, 81) jusqu'au niveau de vol donné, obtenues à des paliers de vol distincts, prises au même intervalle de déplacement de l'aéronef, au moins une courbe d'iso-déplacement étendue (83) au niveau de vol donné maximisant le déplacement de l'aéronef à partir du point géographique d'origine (18) ou minimisant le déplacement de l'aéronef vers le point géographique de destination (20),
le premier module de calcul (64) de trajectoire étant propre à définir une trajectoire à partir d'une pluralité de segments de trajectoire (88A à 88D), chaque segment de trajectoire (88A à 88D) étant défini à un niveau de vol donné sur une pluralité de courbes d'iso-déplacement (79, 80, 81) au palier de vol correspondant au niveau de vol donné depuis une courbe d'iso-déplacement étendue (83) ou/et vers une courbe d'iso-déplacement étendue (83),
dans lequel la courbe d'iso-déplacement étendue (83) est calculée comme le lieu des points de la pluralité de courbes d'iso-déplacement (79, 80, 81) jusqu'au niveau de vol donné, pour lesquels le déplacement de l'aéronef à partir du point géographique d'origine (18) est maximisé ou pour lesquels le déplacement de l'aéronef vers le point géographique de destination (20) est minimisé, chaque point de la courbe d'iso-déplacement étendue (83) étant un point d'une courbe particulière d'iso-déplacement jusqu'au niveau de vol donné choisie parmi la pluralité de courbes d'iso-déplacement (79, 80, 81) obtenues pour un déplacement de l'aéronef jusqu'au niveau de vol donné à partir de déplacements de l'aéronef à des paliers de vol distincts.

2. Système (10) selon la revendication 1, dans lequel une courbe d'iso-déplacement (79) jusqu'au niveau de vol donné correspond à un déplacement en palier au niveau de vol donné, au moins une courbe d'iso-déplacement (80, 81) jusqu'au niveau de vol donné correspondant à un déplacement de l'aéronef à un palier de vol distinct du niveau de vol donné, la ou chaque courbe d'iso-déplacement (80, 81) jusqu'au niveau de vol donné correspondant à un déplacement de l'aéronef à un palier de vol distinct du niveau de vol donné étant obtenue avec un déplacement de l'aéronef comportant une phase de vol en palier (84) au niveau de vol distinct du niveau de vol donné et une phase d'atteinte (85) du niveau de vol donné à partir de la phase de vol en palier (84).

3. Système (10) selon la revendication 2, dans lequel la phase d'atteinte (85) du niveau de vol donné comprend une montée ou une descente suivant un profil prédéterminé, avantageusement à pente constante, à Mach contant ou à vitesse vraie constante.

4. Système (10) selon la revendication 2 ou 3 dans lequel le calcul de la courbe d'iso-déplacement (79, 80, 81) jusqu'au niveau de vol donné correspondant à un déplacement de l'aéronef à un palier de vol distinct du niveau de vol donné comprend le calcul d'un incrément intermédiaire de déplacement auquel la phase (85) d'atteinte du niveau de vol démarre, la détermination d'une courbe d'iso-déplacement intermédiaire au palier de vol distinct à l'incrément intermédiaire de déplacement, puis la détermination de la courbe d'iso-déplacement (79, 80, 81) jusqu'au niveau de vol donné à partir de la courbe d'iso-déplacement intermédiaire.

5. Système (10) selon l'une quelconque des revendications précédentes, dans lequel le point choisi (78) est le point géographique d'origine (18) ou un point de fin de montée à partir du point géographique d'origine (18) ou dans lequel le point choisi (78) est le point géographique de destination (20) ou un point de début de descente vers le point géographique de destination (20).

6. Système (10) selon l'une quelconque des revendications précédentes, dans lequel le point choisi (78) est un point sur une courbe d'iso-déplacement étendue (83) préalablement déterminée.

7. Système (10) selon l'une quelconque des revendications précédentes, dans lequel le premier module de calcul (64) de trajectoire est propre à déterminer une pluralité de courbes d'iso-déplacement (79, 80, 81) successives à chaque incrément de déplacement, au moins une courbe d'iso-déplacement étendue (83) étant obtenue à partir d'une autre courbe d'iso-déplacement étendue (83) par calcul d'une pluralité de courbes d'iso-déplacement (79, 80, 81) depuis l'autre courbe d'iso-déplacement étendue (83), pour un intervalle de déplacement correspondant à plusieurs incréments de déplacement de l'aéronef, chaque courbe d'iso-déplacement (79, 80, 81) étant obtenue pour un déplacement de l'aéronef à un palier de vol distinct vers un niveau de vol donné.

8. Système (10) selon l'une quelconque des revendications précédentes, dans lequel le premier module de calcul (64) de trajectoire est propre à déterminer, après chaque intervalle de déplacement correspondant à plusieurs incréments de déplacement une pluralité de courbes d'iso-déplacement étendues (83) à des niveaux de vol distincts, au moins un segment de trajectoire (88B) étant défini entre un premier point (87A) d'une première courbe d'iso-déplacement étendue (83) déterminée à un premier niveau de vol et un deuxième point (87B) d'une deuxième courbe d'iso-déplacement étendue (83) déterminée à un deuxième niveau de vol différent du premier niveau de vol, le premier point (87A) correspondant à un point d'une courbe d'iso-déplacement (80) résultant d'une phase (84) de vol en palier au deuxième niveau de vol et d'une phase d'atteinte (85) du premier niveau de vol à partir de la phase de vol en palier au deuxième niveau de vol.

9. Système (10) selon la revendication 8, dans lequel le premier module de calcul (64) de trajectoire est propre à déterminer tout d'abord un segment de trajectoire aval (88A) entre le point géographique de destination (20) ou un point de début de descente vers le point géographique de destination (20) et la courbe d'iso-déplacement étendue (83) correspondant au dernier intervalle de déplacement composé de plusieurs incréments d'iso-déplacement vers le point géographique de destination (20) ou vers un point de début de descente vers le point géographique de destination (20),
le premier module de calcul (64) de trajectoire étant propre à déterminer avantageusement au moins un segment de trajectoire intermédiaire (88B, 88C) entre au moins deux courbes d'iso-déplacement étendues (83) de part et d'autre d'un intervalle de déplacement composé de plusieurs incréments d'iso-déplacement,
le premier module de calcul (64) de trajectoire étant ensuite propre à déterminer au moins un segment de trajectoire amont entre une courbe d'iso-déplacement étendue (83) correspondant à un intervalle de déplacement composé de plusieurs incréments d'iso-déplacement depuis le point géographique d'origine (18) ou depuis un point de fin de montée depuis le point géographique d'origine (18).

10. Système (10) selon l'une quelconque des revendications précédentes, dans lequel le contexte de mission comporte des contraintes de navigation comprenant au moins une zone d'évitement tridimensionnelle ou quadridimensionnelle ou une zone de passage souhaité tridimensionnelle ou quadridimensionnelle, la courbe d'iso-déplacement étendue (83) étant calculée à partir de courbes d'iso-déplacement (79, 80, 81) choisies pour des déplacements à des paliers de vol évitant la zone d'évitement tridimensionnelle ou quadridimensionnelle ou/et passant par la zone de passage souhaité tridimensionnelle ou quadridimensionnelle.

11. Procédé de calcul de mission d'un aéronef, utilisant un système (10) de calcul de mission comportant un moteur de calcul (40) de trajectoire de l'aéronef lors de la mission, le procédé comportant les étapes suivantes :
- calcul par un premier module de calcul (64) de trajectoires du moteur de calcul (40), d'une trajectoire optimale de mission (64A) entre un point géographique d'origine (18) et un point géographique de destination (20), en fonction de performances avion, de spécifications opérationnelles de mission et d'un contexte météorologique, de préférence évolutif, dans un volume de mission entre le point géographique d'origine (18) et le point géographique de destination (20),
dans lequel, lors de l'étape de calcul le premier module de calcul (64) de trajectoire calcule une pluralité de courbes d'iso-déplacement (79, 80, 81) à partir d'au moins un point choisi (78) accessible à l'aéronef, à un intervalle de déplacement correspondant à plusieurs incréments de déplacement successifs de l'aéronef depuis le point choisi (78),
la courbe d'iso-déplacement (79, 80, 81) étant une courbe isochrone reliant les points accessibles à l'aéronef à partir d'un point donné en un temps donné qui correspond à un ou plusieurs incréments de temps, le premier module de calcul (64) de trajectoire étant propre à calculer une trajectoire minimisant le temps entre le point géographique d'origine (18) et le point géographique de destination (20),
ou dans lequel chaque courbe d'iso-déplacement (79, 80, 81) est une courbe d'iso-consommation de carburant reliant les points accessibles à l'aéronef à partir d'un point donné avec une consommation en carburant donnée qui correspond à un ou plusieurs incréments de carburant consommé, le premier module de calcul (64) de trajectoire étant propre à calculer une trajectoire minimisant la consommation de carburant entre le point géographique d'origine (18) et le point géographique de destination (20),
ou dans lequel chaque courbe d'iso-déplacement (79, 80, 81) est une courbe d'iso-coût, le coût étant défini comme une fonction du temps de parcours et du carburant consommé, chaque incrément de déplacement étant un incrément de coût d'une valeur donnée constante, le premier module de calcul (64) de trajectoire étant propre à calculer une trajectoire minimisant le coût entre le point géographique d'origine (18) et le point géographique de destination (20),
**caractérisé en ce que**:
les courbes d'iso-déplacement (79, 80, 81) sont obtenues à l'intervalle de déplacement pour un déplacement de l'aéronef jusqu'à un niveau de vol donné à partir de déplacements de l'aéronef à des paliers de vol distincts,
et le premier module de calcul (64) de trajectoire détermine, sur la base des courbes d'iso-déplacement (79, 80, 81) jusqu'au niveau de vol donné, obtenues à des paliers de vol distincts, prises au même intervalle de déplacement de l'aéronef, au moins une courbe d'iso-déplacement étendue (83) au niveau de vol donné maximisant le déplacement de l'aéronef à partir du point géographique d'origine (18) ou minimisant le déplacement de l'aéronef vers le point géographique de destination (20),
le premier module de calcul (64) de trajectoire définissant une trajectoire à partir d'une pluralité de segments de trajectoire (88A à 88D), chaque segment de trajectoire (88A à 88D) étant défini à un niveau de vol donné sur une pluralité de courbes d'iso-déplacement (79, 80, 81) au palier de vol correspondant au niveau de vol donné depuis une courbe d'iso-déplacement étendue (83) ou/et vers une courbe d'iso-déplacement étendue (83),
dans lequel la courbe d'iso-déplacement étendue (83) est calculée comme le lieu des points de la pluralité de courbes d'iso-déplacement (79, 80, 81) jusqu'au niveau de vol donné, pour lesquels le déplacement de l'aéronef à partir du point géographique d'origine (18) est maximisé ou pour lesquels le déplacement de l'aéronef vers le point géographique de destination (20) est minimisé, chaque point de la courbe d'iso-déplacement étendue (83) étant un point d'une courbe particulière d'iso-déplacement jusqu'au niveau de vol donné choisie parmi la pluralité de courbes d'iso-déplacement (79, 80, 81) obtenues pour un déplacement de l'aéronef jusqu'au niveau de vol donné à partir de déplacements de l'aéronef à des paliers de vol distincts.

## Patentansprüche

1. Berechnungssystem (10) der Mission eines Luftfahrzeugs, umfassend eine Flugbahnberechnungsmaschine (40) des Luftfahrzeugs während des Einsatzes, die Berechnungsmaschine (40) Folgendes umfassend:
- ein erstes Flugbahnberechnungsmodul (64), das geeignet ist, um eine optimale Einsatzflugbahn (64A) zwischen einem geografischen Ausgangspunkt (18) und einem geografischen Zielpunkt (20) abhängig von Luftfahrzeugleistungen, operativen Einsatzspezifikationen und einem vorzugsweise sich entwickelnden meteorologischen Kontext in einem Einsatzvolumen zwischen dem geografischen Ausgangspunkt (18) und dem geografischen Zielpunkt (20) zu berechnen,
wobei das erste Flugbahnberechnungsmodul (64) geeignet ist, um eine Vielzahl von Iso-Bewegungskurven (79, 80, 81) ausgehend von mindestens einem ausgewählten Punkt (78), der für das Luftfahrzeug zugänglich ist, in einem Bewegungsintervall zu berechnen, das mehreren aufeinanderfolgenden Bewegungsinkrementen des Luftfahrzeugs ab dem ausgewählten Punkt (78) entspricht,
wobei die Iso-Bewegungskurve (79, 80, 81) eine isochrone Kurve ist, die die Punkte verbindet, die für das Luftfahrzeug ab einem gegebenen Punkt in einer gegebenen Zeit, die einem oder mehreren Zeitinkrementen entspricht, erreichbar sind, wobei das erste Flugbahnberechnungsmodul (64) geeignet ist, um eine Flugbahn zu berechnen, die die Zeit zwischen dem geografischen Ausgangspunkt (18) und dem geografischen Zielpunkt (20) minimiert,
oder wobei jede Iso-Bewegungskurve (79, 80, 81) eine Iso-Treibstoffverbrauchskurve ist, die Punkte verbindet, die für das Luftfahrzeug ab einem gegebenen Punkt mit einem gegebenen Treibstoffverbrauch erreichbar sind, der einem oder mehreren Inkrementen des verbrauchten Treibstoffs entspricht, wobei das erste Flugbahnberechnungsmodul (64) geeignet ist, um eine Flugbahn zu berechnen, die den Treibstoffverbrauch zwischen dem geographischen Ausgangspunkt (18) und dem geographischen Zielpunkt (20) minimiert,
oder wobei jede Iso-Bewegungskurve (79, 80, 81) eine Iso-Kostenkurve ist, wobei die Kosten abhängig von der Flugzeit und dem verbrauchten Treibstoff definiert sind, wobei jedes Bewegungsinkrement ein Kosteninkrement eines konstanten gegebenen Werts ist, wobei das erste Flugbahnberechnungsmodul (64) geeignet ist, um eine kostenminimierende Flugbahn zwischen dem geografischen Ausgangspunkt (18) und dem geografischen Zielpunkt (20) zu berechnen,
**dadurch gekennzeichnet, dass**:
die Iso-Bewegungskurven (79, 80, 81) in dem Bewegungsintervall für eine Bewegung des Luftfahrzeugs bis zu einer gegebenen Flughöhe aus Bewegungen des Luftfahrzeugs bei unterschiedlichen Flugphasen erlangt werden,
und das erste Flugbahnberechnungsmodul (64) geeignet ist, um basierend auf den Iso-Bewegungskurven (79, 80, 81) bis zu der gegebenen Flughöhe, die bei unterschiedlichen Flugphasen erlangt werden, die demselben Bewegungsintervall des Luftfahrzeugs entnommen wurden, mindestens eine erweiterte Iso-Bewegungskurve (83) bei der gegebenen Flughöhe zu bestimmen, die die Bewegung des Luftfahrzeugs ab dem geographischen Ausgangspunkt (18) maximiert oder die Bewegung des Luftfahrzeugs zu dem geographischen Zielpunkt (20) minimiert,
wobei das erste Flugbahnberechnungsmodul (64) geeignet ist, um eine Flugbahn aus einer Vielzahl von Flugbahnsegmenten (88A bis 88D) zu definieren, wobei jedes Flugbahnsegment (88A bis 88D) bei einer gegebenen Flughöhe auf einer Vielzahl von Iso-Bewegungskurven (79, 80, 81) bei der Flugstufe definiert ist, die der gegebenen Flughöhe von einer erweiterten Iso-Bewegungskurve (83) oder/und zu einer erweiterten Iso-Bewegungskurve (83) entspricht,
wobei die erweiterte Iso-Bewegungskurve (83) als der Ort der Punkte der Vielzahl von Iso-Bewegungskurven (79, 80, 81) bis zu der gegebenen Flughöhe berechnet wird, bei denen die Bewegung des Luftfahrzeugs von dem geographischen Ausgangspunkt (18) maximiert ist oder bei denen die Bewegung des Luftfahrzeugs zu dem geographischen Zielpunkt (20) minimiert ist, jeder Punkt der erweiterten Iso-Bewegungskurve (83) ein Punkt einer jeweiligen Iso-Bewegungskurve bis zu der gegebenen Flughöhe ist, die ausgewählt ist aus der Vielzahl von Iso-Bewegungskurven (79, 80, 81), die für eine Bewegung des Luftfahrzeugs bis zu der gegebenen Flughöhe aus Bewegungen des Luftfahrzeugs bei unterschiedlichen Flugphasen erlangt werden.

2. System (10) nach Anspruch 1, wobei eine Iso-Bewegungskurve (79) bis zu der gegebenen Flughöhe einer Horizontalbewegung auf der gegebenen Flughöhe entspricht, wobei mindestens eine Iso-Bewegungskurve (80, 81) bis zu der gegebenen Flughöhe einer Bewegung des Luftfahrzeugs einer Flugstufe entspricht, die sich von der gegebenen Flughöhe unterscheidet, die oder jede Iso-Bewegungskurve (80, 81) bis zu der gegebenen Flughöhe, die einer Bewegung des Luftfahrzeugs auf einer von der gegebenen Flughöhe verschiedenen Flugstufe entspricht, mit einer Bewegung des Luftfahrzeugs erlangt wird, die eine Horizontalflugphase (84) auf der von der gegebenen Flughöhe verschiedenen Flughöhe und einer Erreichungsphase (85) der gegebenen Flughöhe ausgehend von der Horizontalflugphase (84) umfasst.

3. System (10) nach Anspruch 2, wobei die Erreichungsphase (85) der gegebenen Flughöhe einen Steig- oder Sinkflug gemäß einem vorbestimmten Profil umfasst, vorteilhafterweise mit konstanter Steigung, konstantem Mach oder konstanter wahrer Geschwindigkeit.

4. System (10) nach Anspruch 2 oder 3, wobei die Berechnung der Iso-Bewegungskurve (79, 80, 81) bis zu der gegebenen Flughöhe, die einer Bewegung des Luftfahrzeugs auf einer von dem gegebenen Flughöhe getrennten Flugstufe entspricht, ein Berechnen eines Zwischenbewegungsinkrements, bei dem die Erreichungsphase (85) der Flughöhe beginnt, ein Bestimmen einer Iso-Zwischenbewegungskurve auf der Flugstufe, die sich von dem Zwischenbewegungsinkrement unterscheidet, und dann ein Bestimmen der Iso-Bewegungskurve (79, 80, 81) bis zu der gegebenen Flughöhe anhand der Iso-Zwischenbewegungskurve umfasst.

5. System (10) nach einem der vorherigen Ansprüche, wobei der ausgewählte Punkt (78) der geografische Ausgangspunkt (18) oder ein Steigendpunkt ab dem geografischen Ausgangspunkt (18) ist, oder wobei der ausgewählte Punkt (78) der geografische Zielpunkt (20) oder ein Sinkanfangspunkt zu dem geografischen Zielpunkt (20) ist.

6. System (10) nach einem der vorherigen Ansprüche, wobei der ausgewählte Punkt (78) ein Punkt auf einer zuvor bestimmten erweiterten Iso-Bewegungskurve (83) ist.

7. System (10) nach einem der vorherigen Ansprüche, wobei das erste Flugbahnberechnungsmodul (64) geeignet ist, um bei jedem Bewegungsinkrement eine Vielzahl von aufeinanderfolgenden Iso-Bewegungskurven (79, 80, 81) zu bestimmen, wobei mindestens eine erweiterte Iso-Bewegungskurve (83) ausgehend von einer anderen erweiterten Iso-Bewegungskurve (83) durch Berechnen einer Vielzahl von Iso-Bewegungskurven (79, 80, 81) von der anderen erweiterten Iso-Bewegungskurve (83) für ein Bewegungsintervall erlangt wird, das mehreren Bewegungsinkrementen des Luftfahrzeugs entspricht, wobei jede Iso-Bewegungskurve (79, 80, 81) für eine Bewegung des Luftfahrzeugs auf einer unterschiedlichen Flugstufe zu einer gegebenen Flughöhe erlangt wird.

8. System (10) nach einem der vorherigen Ansprüche, wobei das erste Flugbahnberechnungsmodul (64) geeignet ist, um nach jedem Bewegungsintervall, das mehreren Bewegungsinkrementen entspricht, eine Vielzahl von erweiterten Iso-Bewegungskurven (83) auf unterschiedlichen Flughöhen zu bestimmen, wobei mindestens ein Flugbahnsegment (88B) zwischen einem ersten Punkt (87A) einer ersten erweiterten Iso-Bewegungskurve (83), die auf einer ersten Flughöhe bestimmt wird, und einem zweiten Punkt (87B) einer zweiten erweiterten Iso-Bewegungskurve (83), die auf einer zweiten Flughöhe bestimmt wird, die sich von der ersten Flughöhe unterscheidet, definiert ist, wobei der erste Punkt (87A) einem Punkt einer Iso-Bewegungskurve (80) entspricht, der aus einer Horizontalflugphase (84) auf der zweiten Flughöhe und einer Erreichungsphase (85) der ersten Flughöhe ausgehend von der Horizontalflugphase auf der zweiten Flughöhe resultiert.

9. System (10) nach Anspruch 8, wobei das erste Flugbahnberechnungsmodul (64) geeignet ist, um zunächst ein stromabwärtiges Flugbahnsegment (88A) zwischen dem geografischen Zielpunkt (20) oder einem Sinkanfangspunkt zu dem geografischen Zielpunkt (20) und der erweiterten Iso-Bewegungskurve (83) zu bestimmen, die dem letzten Bewegungsintervall entspricht, das sich aus mehreren Iso-Bewegungsinkrementen zu dem geografischen Zielpunkt (20) oder zu einem Sinkanfangspunkt zu dem geografischen Zielpunkt (20) zusammensetzt,
wobei das erste Flugbahnberechnungsmodul (64) geeignet ist, um vorteilhafterweise mindestens ein Zwischenflugbahnsegment (88B, 88C) zwischen mindestens zwei erweiterten Iso-Bewegungskurven (83) auf beiden Seiten eines aus mehreren Iso-Bewegungsinkrementen bestehenden Bewegungsintervalls zu bestimmen,
wobei das erste Flugbahnberechnungsmodul (64) dann geeignet ist, um mindestens ein stromaufwärtiges Flugbahnsegment zwischen einer erweiterten Iso-Bewegungskurve (83) zu bestimmen, die einem Bewegungsintervall entspricht, das sich aus mehreren Iso-Bewegungsinkrementen ab dem geographischen Ausgangspunkt (18) oder ab einem Steigendpunkt ab dem geographischen Ausgangspunkt (18) zusammensetzt.

10. System (10) nach einem der vorherigen Ansprüche, wobei der Einsatzkontext Navigationsvorgaben aufweist, umfassend mindestens eine dreidimensionale oder vierdimensionale Vermeidungszone oder eine dreidimensionale oder vierdimensionale gewünschte Durchgangszone, wobei die erweiterte Iso-Bewegungskurve (83) ausgehend von Iso-Bewegungskurven (79, 80, 81) berechnet wird, die für Bewegungen bei Flugstufen ausgewählt werden, die die dreidimensionale oder vierdimensionale Vermeidungszone vermeiden oder/und die dreidimensionale oder vierdimensionale gewünschte Durchgangszone durchfliegen.

11. Einsatzberechnungsverfahren eines Luftfahrzeugs unter Verwendung eines Einsatzberechnungssystems (10), das eine Flugbahnberechnungsmaschine (40) des Luftfahrzeugs während des Einsatzes umfasst, wobei das Verfahren die folgenden Schritte umfasst:
- Berechnen einer optimalen Einsatzflugbahn (64A) zwischen einem geographischen Ausgangspunkt (18) und einem geographischen Zielpunkt (20) durch ein erstes Flugbahnberechnungsmodul (64) der Berechnungsmaschine (40) abhängig von Flugzeugleistungen, operativen Einsatzspezifikationen und einem vorzugsweise sich entwickelnden meteorologischen Kontext in einem Einsatzvolumen zwischen dem geografischen Ausgangspunkt (18) und dem geografischen Zielpunkt (20),
wobei,
während des Berechnungsschritts das erste Flugbahnberechnungsmodul (64) eine Vielzahl von Iso-Bewegungskurven (79, 80, 81) von mindestens einem ausgewählten Punkt (78), der für das Luftfahrzeug zugänglich ist, in einem Bewegungsintervall berechnet, das mehreren aufeinanderfolgenden Bewegungsinkrementen des Luftfahrzeugs ab dem ausgewählten Punkt (78) entspricht,
wobei die Iso-Bewegungskurve (79, 80, 81) eine isochrone Kurve ist, die die Punkte verbindet, die für das Luftfahrzeug ab einem gegebenen Punkt in einer gegebenen Zeit, die einem oder mehreren Zeitinkrementen entspricht, erreichbar sind, wobei das erste Flugbahnberechnungsmodul (64) geeignet ist, um eine Flugbahn zu berechnen, die die Zeit zwischen dem geografischen Ausgangspunkt (18) und dem geografischen Zielpunkt (20) minimiert,
oder wobei jede Iso-Bewegungskurve (79, 80, 81) eine Iso-Treibstoffverbrauchskurve ist, die Punkte verbindet, die für das Luftfahrzeug ab einem gegebenen Punkt mit einem gegebenen Treibstoffverbrauch erreichbar sind, der einem oder mehreren Inkrementen des verbrauchten Treibstoffs entspricht, wobei das erste Flugbahnberechnungsmodul (64) geeignet ist, um eine Flugbahn zu berechnen, die den Treibstoffverbrauch zwischen dem geographischen Ausgangspunkt (18) und dem geographischen Zielpunkt (20) minimiert,
oder wobei jede Iso-Bewegungskurve (79, 80, 81) eine Iso-Kostenkurve ist, wobei die Kosten abhängig von der Flugzeit und dem verbrauchten Treibstoff definiert sind, wobei jedes Bewegungsinkrement ein Kosteninkrement eines konstanten gegebenen Werts ist, wobei das erste Flugbahnberechnungsmodul (64) geeignet ist, um eine kostenminimierende Flugbahn zwischen dem geografischen Ausgangspunkt (18) und dem geografischen Zielpunkt (20) zu berechnen,
**dadurch gekennzeichnet, dass**:
die Iso-Bewegungskurven (79, 80, 81) in dem Bewegungsintervall für eine Bewegung des Luftfahrzeugs bis zu einer gegebenen Flughöhe aus Bewegungen des Luftfahrzeugs bei unterschiedlichen Flugphasen erlangt werden,
und das erste Flugbahnberechnungsmodul (64) basierend auf den Iso-Bewegungskurven (79, 80, 81) bis zu der gegebenen Flughöhe, die bei unterschiedlichen Flugphasen erlangt werden, die demselben Bewegungsintervall des Luftfahrzeugs entnommen wurden, mindestens eine erweiterte Iso-Bewegungskurve (83) bei der gegebenen Flughöhe bestimmt, die die Bewegung des Luftfahrzeugs ab dem geographischen Ausgangspunkt (18) maximiert oder die Bewegung des Luftfahrzeugs zu dem geographischen Zielpunkt (20) minimiert,
das erste Flugbahnberechnungsmodul (64) eine Flugbahn aus einer Vielzahl von Flugbahnsegmenten (88A bis 88D) definiert, wobei jedes Flugbahnsegment (88A bis 88D) bei einer gegebenen Flughöhe auf einer Vielzahl von Iso-Bewegungskurven (79, 80, 81) bei der Flugstufe definiert ist, die der gegebenen Flughöhe von einer erweiterten Iso-Bewegungskurve (83) oder/und zu einer erweiterten Iso-Bewegungskurve (83) entspricht,
wobei die erweiterte Iso-Bewegungskurve (83) als der Ort der Punkte der Vielzahl von Iso-Bewegungskurven (79, 80, 81) bis zu der gegebenen Flughöhe berechnet wird, bei denen die Bewegung des Luftfahrzeugs von dem geographischen Ausgangspunkt (18) maximiert ist oder bei denen die Bewegung des Luftfahrzeugs zu dem geographischen Zielpunkt (20) minimiert ist, jeder Punkt der erweiterten Iso-Bewegungskurve (83) ein Punkt einer jeweiligen Iso-Bewegungskurve bis zu der gegebenen Flughöhe ist, die ausgewählt ist aus der Vielzahl von Iso-Bewegungskurven (79, 80, 81), die für eine Bewegung des Luftfahrzeugs bis zu der gegebenen Flughöhe aus Bewegungen des Luftfahrzeugs bei unterschiedlichen Flugphasen erlangt werden.

## Claims

1. An aircraft mission calculating system (10) including a calculation engine (40) for calculating aircraft trajectories during the mission, the calculation engine (40) comprising:
- a first path calculation module (64), capable of calculating an optimal mission path (64A) between a geographical point of origin (18) and a geographical destination point (20), as a function of airplane performance, operational mission specifications and a weather context, preferably evolving, in a mission volume between the geographical point of origin (18) and the geographical destination point (20),
the first path calculation module (64) being able to calculate a plurality of iso-movement curves (79, 80, 81) from at least one selected point (78) accessible to the aircraft, at a movement range corresponding to several successive movement increments of the aircraft from the selected point (78),
each iso-movement curve (79, 80, 81) being an isochronous curve connecting the accessible points for the aircraft from a given point in a given time which corresponds to one or more time increments, the first path calculation module (64) being able to calculate a path minimizing the time between the geographical point of origin (18) and the geographical destination point (20),
or wherein each iso-movement curve (79, 80, 81) is a fuel iso-consumption curve connecting the accessible points for the aircraft with a given point with a given fuel consumption which corresponds to one or more fuel consumption increments, the first path calculation module (64) being able to calculate a path minimizing the consumption of fuel between the geographical point of origin (18) and the geographical destination point (20),
or wherein each iso-movement curve (79, 80, 81) is an iso-cost curve, the cost being defined as a function of the travel time and the consumed fuel, each movement increment being a cost increment with a constant given value, the first path calculation module (64) being able to calculate a path minimizing the cost between the geographical point of origin (18) and the geographical destination point (20),
**characterized in that** the iso-movement curves (79, 80, 81) are obtained at the movement range for a movement of the aircraft to a given flight level from movements of the aircraft at separate flight altitude levels,
and that the first path calculation module (64) is able to determine, based on iso-movement curves (79, 80, 81) up to the given flight level, obtained at separate flight levels, taken at the same movement range of the aircraft, at least one extended iso-movement curve (83) at the given flight level maximizing the movement of the aircraft from the geographical point of origin (18) or minimizing the movement of the aircraft toward the geographical destination point (20),
the first path calculation module (64) being able to define a path from a plurality of path segments (88A to 88D), each path segment (88A to 88D) being defined at a given flight level on a plurality of iso-movement curves (79, 80, 81) of the flight altitude level corresponding to the given flight level from an extended iso-movement curve (83) and/or toward an extended iso-movement curve (83),
wherein the extended iso-movement curve (83) is calculated as the location of the points of the plurality of iso-movement curves (79, 80, 81) up to the given flight level, for which the movement of the aircraft from the geographical point of origin (18) is maximized or for which the movement of the aircraft toward the geographical destination point (20) is minimized, each point of the extended iso-movement curve (83) being a point of a specific iso-movement curve up to the given altitude flight level chosen among the plurality of iso-movement curves (79, 80, 81) obtained for a movement of the aircraft up to the given flight level from movements of the aircraft at separate altitude flight levels.

2. The system (10) according to claim 1, wherein an iso-movement curve (79) up to the given flight altitude level corresponds to an altitude level movement at the given flight level, at least one iso-movement curve (80, 81) up to the given flight level corresponding to a movement of the aircraft at an flight altitude level separate from the given flight level, the or each iso-movement curve (80, 81) up to the given flight level corresponding to a movement of the aircraft at an altitude flight level separate from the given flight level being obtained with a movement of the aircraft including an altitude level flight phase (84) at the flight level separate from the given flight level and a phase (85) for reaching the given flight level from the level flight phase (84).

3. The system (10) according to claim 2, wherein the phase (85) for reaching the given flight level comprises an ascent or a descent according to a predetermined profile, advantageously with a constant slope, constant Mach or constant true airspeed.

4. The system (10) according to claim 2 or 3, wherein the calculation of the iso-movement curve (79, 80, 81) up to the given flight altitude level corresponding to a movement of the aircraft at a flight altitude level separate from the given flight level comprises calculating an intermediate movement increment at which the phase (85) for reaching the flight level begins, determining an intermediate iso-movement curve at the separate flight altitude level at the intermediate movement increment, then determining the iso-movement curve (79, 80, 81) up to the given flight level from the intermediate iso-movement curve.

5. The system (10) according to any one of the preceding claims, wherein the selected point (78) is the geographical point of origin (18) or an end point of the ascent from the geographical point of origin (18) or wherein the selected point (78) is the geographical destination point (20) or a starting point of the descent toward the geographical destination point (20).

6. The system (10) according to any one of the preceding claims, wherein the chosen point (78) is a point on a previously determined extended iso-movement curve (83).

7. The system (10) according to any one of the preceding claims, wherein the first path calculation module (64) is able to determine a plurality of successive iso-movement curves (79, 80, 81) at each movement increment, at least one extended iso-movement curve (83) being obtained from another extended iso-movement curve (83) by calculating a plurality of iso-movement curves (79, 80, 81) from the other extended iso-movement curve (83), for a movement range corresponding to several movement increments of the aircraft, each iso-movement curve (79, 80, 81) being obtained for a movement of the aircraft at a separate flight altitude level toward a given flight level.

8. The system (10) according to any of the preceding claims, wherein the first path calculation module (64) is able to determine, after each movement range corresponding to several movement increments, a plurality of extended iso-movement curves (83) at separate flight levels, at least one path segment (88B) being defined between a first point (87A) of a first extended iso-movement curve (83) determined at a first flight level and a second point (87B) of a second extended iso-movement curve (83) determined at a second flight level different from the first flight level, the first point (87A) corresponding to a point of an iso-movement curve (80) resulting from an altitude level flight phase (84) at the second flight level and a phase (85) for reaching the first flight level from the altitude level flight phase at the second flight level.

9. The system (10) according to claim 8, wherein the first path calculation module (64) is able first to determine a downstream path segment (88A) before the geographical destination point (20) or a beginning of descent point toward the geographical destination point (20) and the extended iso-movement curve (83) corresponding to the last movement range made up of several iso-movement increments toward the geographical destination point (20) or toward the geographical beginning of descent point toward the geographical destination point (20),
the first path calculation module (64) being advantageously able to determine at least one intermediate path segment (88B, 88C) between at least two extended iso-movement curves (83) on either side of a movement range made up of several iso-movement increments,
the first path calculation module (64) being then able to determine at least one upstream path segment between an extended iso-movement curve (83) corresponding to a movement range made up of several iso-movement increments from the geographical point of origin (18) or from an end of ascent point from the geographical point of origin (18).

10. The system (10) according to any one of the preceding claims, wherein the mission context includes navigation constraints comprising at least one three-dimensional or four dimensional avoidance zone or three-dimensional or four-dimensional desired passage zone, the extended iso-movement curve (83) being calculated from chosen iso-movement curves (79, 80, 81) for movements at flight altitude levels avoiding the three-dimensional or four-dimensional avoidance zone and/or passing through the three-dimensional or four-dimensional desired passage zone.

11. A process for calculating a mission of an aircraft, using a mission calculating system (10) including a calculation engine (40) for calculating paths of the aircraft during the mission, the method including the following steps:
- calculating, via a first path calculation module (64) of the calculation engine (40), an optimal mission path (64A) between a geographical point of origin (18) and a geographical destination point (20), as a function of airplane performance, operational mission specifications and a weather context, preferably evolving, in a mission volume between the geographical point of origin (18) and the geographical destination point (20),
in which, during the calculating step, the first path calculation module (64) calculates a plurality of iso-movement curves (79, 80, 81) from at least one selected point (78) accessible to the aircraft, at a movement range corresponding to several successive movement increments of the aircraft from the selected point (78),
wherein each iso-movement curve (79, 80, 81) is a isochronous curve connecting the accessible points for the aircraft from a given point in a given time which corresponds to one or more time increments, the first path calculation module (64) being able to calculate a path minimizing the time between the geographical point of origin (18) and the geographical destination point (20),
or wherein each iso-movement curve (79, 80, 81) is a fuel iso-consumption curve connecting the accessible points for the aircraft with a given point with a given fuel consumption which corresponds to one or more fuel consumption increments, the first path calculation module (64) being able to calculate a path minimizing the consumption of fuel between the geographical point of origin (18) and the geographical destination point (20),
or wherein each iso-movement curve (79, 80, 81) is an iso-cost curve, the cost being defined as a function of the travel time and the consumed fuel, each movement increment being a cost increment with a constant given value, the first path calculation module (64) being able to calculate a path minimizing the cost between the geographical point of origin (18) and the geographical destination point (20),
**characterized in that**: the iso-movement curves (79, 80, 81) are obtained at the movement range for a movement of the aircraft to a given flight level from movements of the aircraft at separate flight altitude levels,
and the first path calculation module (64) determines, based on iso-movement curves (79, 80, 81) up to the given flight level, obtained at separate flight altitude levels, taken at the same movement range of the aircraft, at least one extended iso-movement curve (83) at the given flight level maximizing the movement of the aircraft from the geographical point of origin (18) or minimizing the movement of the aircraft toward the geographical destination point (20),
the first path calculation module (64) defining a path from a plurality of path segments (88A to 88D), each path segment (88A to 88D) being defined at a given flight level on a plurality of iso-movement curves (79, 80, 81) of the flight altitude level corresponding to the given flight level from an extended iso-movement curve (83) and/or toward an extended iso-movement curve (83),
wherein the extended iso-movement curve (83) is calculated as the location of the points of the plurality of iso-movement curves (79, 80, 81) up to the given flight level, for which the movement of the aircraft from the geographical point of origin (18) is maximized or for which the movement of the aircraft toward the geographical destination point (20) is minimized, each point of the extended iso-movement curve (83) being a point of a specific iso-movement curve up to the given flight level chosen among the plurality of iso-movement curves (79, 80, 81) obtained for a movement of the aircraft up to the given flight level from movements of the aircraft at separate flight altitude levels.
